# EUROPEAN PATENT SPECIFICATION

(11) **EP 3 091 829 B1**
(45) Date of publication and mention of the grant of the patent: **01.08.2018**
(21) Application number: 15700803.8
(22) Date of filing: 07.01.2015
(51) Int. Cl.: A01F 15/07, A01F 15/08

(54) **BALE FORMING APPARATUS AND METHOD USING PRESSING ROLLERS FOR DELIMITING A VARIABLE SIZE CHAMBER**
BALLENFORMUNGSVORRICHTUNG UND VERFAHREN MIT PRESSWALZEN ZUR BEGRENZUNG EINER KAMMER MIT VARIABLER GRÖSSE
APPAREIL DE FORMATION DE BALLES ET PROCÉDÉ EMPLOYANT DES ROULEAUX DE PRESSAGE POUR DÉLIMITER UN COMPARTIMENT DE TAILLE VARIABLE

(30) Priority: 10.01.2014 NL 2012073
(43) Date of publication of application: 16.11.2016
(73) Proprietor: Forage Innovations B.V., 3147 PB Maassluis (NL)
(72) Inventor: REIJERSEN VAN BUUREN, Willem Jacobus, NL-3147 PB Maassluis (NL)
(74) Representative: AGCO Intellectual Property Department
(86) International application number: PCT/NL2015/050005
(87) International publication number: WO 2015/105417

(56) References cited:
- EP-A1- 0 954 958
- EP-A1- 2 570 022
- US-A- 4 288 971
- US-A- 4 765 237
- US-B1- 6 170 245

## Description

### FIELD OF THE INVENTION

The invention refers to a bale forming apparatus and to a bale forming method for forming a round-cylindrical bale from loose material, in particular from loose agricultural crop material.

### BACKGROUND OF THE INVENTION

A bale forming apparatus for round bales (round baler, roll baler) injects loose material into a drum-shaped bale forming chamber and forms under pressure a round-cylindrical bale in the bale forming chamber. The bale forming chamber comprises an inlet for loose material and is - besides this inlet - surrounded by a bale forming means.

According to one basic embodiment of a round baler the bale forming means comprises a set of pressing rollers (bale forming rollers). These pressing rollers surround and delimit nearly the entire circumferential surface of the bale forming chamber while the bale is formed in the bale forming chamber. The rotating axes of the pressing rollers are parallel to the center axis of the drum-shaped bale forming chamber. The rotating pressing rollers rotate an increasing round-cylindrical bale in the bale forming chamber around its own center axis which is parallel to the center axis of the drum-shaped bale forming chamber.

If every pressing roller is stationary mounted, i.e. can only rotate around its own rotating axis but cannot be shifted laterally, the round baler provides a bale forming chamber of a fixed size. EP 1157603 B1 discloses such a round baler. Several pressing rollers 22 surround a bale forming chamber 20 with fixed size.

A round baler with a fixed-size chamber can only form bales with one diameter and can nearly not vary the pressure applied on the loose material in the bale forming chamber while forming the increasing bale. To overcome this limitation several suggestions for a round baler with pressing rollers which provide a variable size chamber were made. Every suggestion uses at least one pressing roller which can be moved perpendicular to its own rotating axis for varying the chamber size.

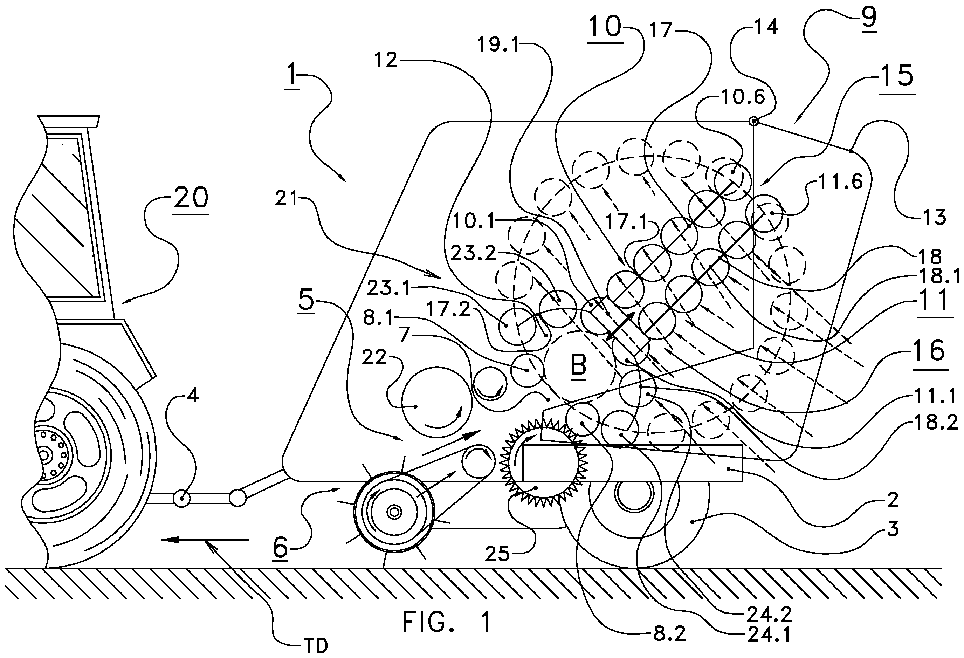

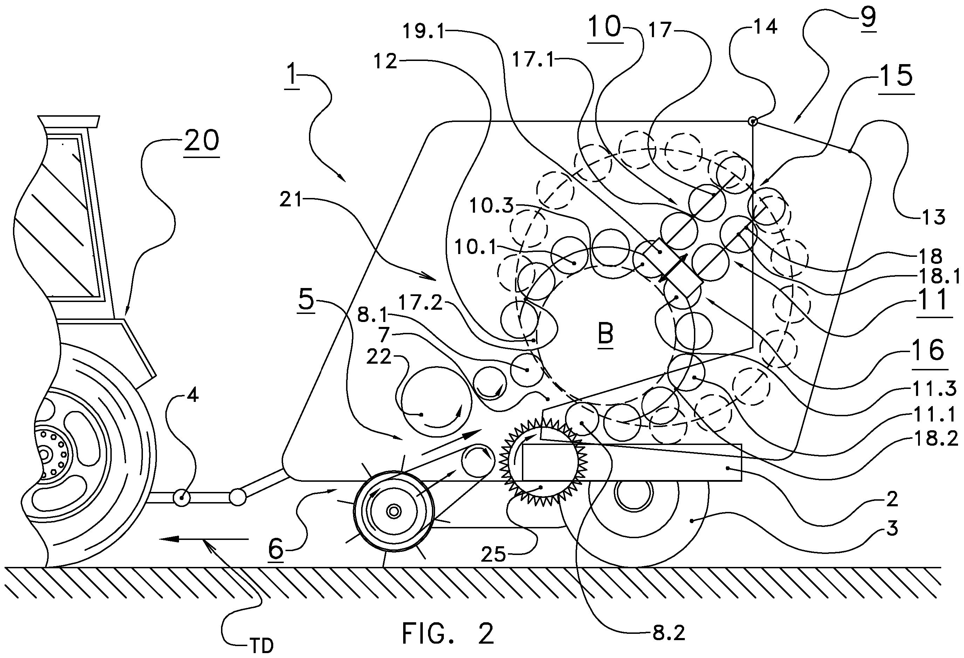

US 4765237 discloses a round baler which forms a round bale by means of several pressing rollers 8, cf. Fig. 1. These rollers 8 forma first bale-forming means. A first portion 9 carries three rollers 11. A second portion 10 carries two rollers 12. The portions 9 and 10 and thereby the rollers 11 and 12 are movable with respect to the rollers 8. The rollers 11 are mounted between opposing sidewalls 13 which are interconnected by a pair of transverse beams 14. The rollers 12 are also mounted between opposing sidewalls 15 which are interconnected by a further transverse beam 16. The portions 9 and 10 can pivot away from the crop material inlet, cf. Fig. 1 and Fig. 2.

Fig. 1 of US 4288971 shows a round baler 10 with a set of shifting rollers 26, 28, ..., 38 and stationary rollers 24 and 48 to 58. An increasing bale 40 is formed. The shifting rollers 26, 28, ... are moved outwards towards the stationary rollers and are shifted. Every shifting roller is moved into a place between two adjacent stationary rollers.

The round baler 10 of US 6170245 B1 forms a round bale in a pressing chamber of variable size, i.e. an expanding bale forming chamber. This chamber is defined by two opposing sidewalls 19, 19', an apron 32 with several parallel pressing belts, and a sledge assembly 20. Three pressing rollers 21, 22, 23 are mounted on the pivotal sledge assembly, namely between two arms 24. A spring 42 biases the sledge assembly 20 in a start position and provides a force on the sledge assembly.

US 4,765,238 discloses a round agricultural baler with pressing rollers. This round baler provides a variable bale forming chamber. Several pressing rollers 8, 11, 12 surround this bale forming chamber. A first moveable portion 9 with sidewalls 13 carries three pressing rollers 11. A further moveable portion 10 with further sidewalls 15 carries two further pressing rollers 12, 12'. The portions 9, 10 can pivot with respect to the stationary other pressing rollers around a pivoting axis coinciding with that of the lowermost pressing roller 11. In addition the further portion 10 can pivot with respect to the first portion 9 around a pivoting axis coinciding with that of the uppermost pressing roller 11. Fig. 1 and Fig. 4 show the bale forming chamber in the full size, Fig. 2 in a reduced size and in an intermediate position. The portions 9, 10 pivot from the position of Fig. 2 to the position of Fig. 1 while an increasing bale is formed. Two pressing rollers 8, 8' are mounted on two pivotal plates 49 which are positioned above the two portions 9, 10. The plates 49 with the pressing rollers 8, 8' can be pivoted in a direction opposite to the portions 9, 10. This opposite pivoting enables the portions 9, 10 to be pivoted into a position for a full chamber size.

US 4,566,379 discloses a similar construction. A set of pressing rollers 50a to 50f are rotatably mounted between two pivotal arms 46. The arms 46 can pivot around shaft stubs 48 which are mounted at the front housing and above the crop material inlet. In a further embodiment a set of pressing rollers 96a to 96f are mounted between two arms 92. The arms 92 can rotate around stub shafts 94 which are mounted near the lower edge of the tailgate 14.

EP 2042027 A1 discloses an agricultural round baler (Ballenpresse 2), cf. Fig. 1. Several pressing rollers (Walzen 3, 3', 3") are rotatably mounted and delimit a pressing chamber 13, cf. col.4/I.3-5. Two pressing rollers 3', 3" are kept by a moveable frame (Rahmen 8). A hydraulic actuator (Stellglied 9) can pivot this frame 8 around an axis 7, cf. col.4/I.5-10. Fig. 1 shows two different positions of the frame 8 (continuous lines and dotted lines). While a bale increases in the pressing chamber 13, the frame 8 is pivoted from the initial position (continuous line) to the final position (dotted line) against the force of the actuator 9, col.4/I.19-28. A sensor (Drehwinkelsensor 20) measures the angle over which the frame 8 is rotated around the axis 7, cf. col.4/I.49-54.

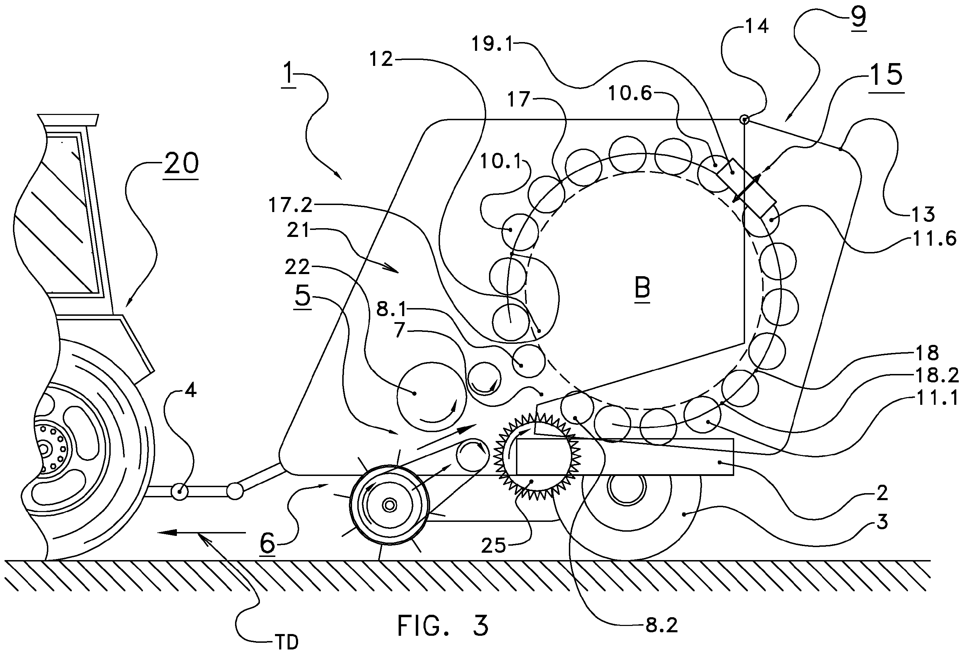

US 4,731,984 also discloses a round baler in which several pressing rollers delimit a baling chamber and in which some pressing rollers can be moved during the formation of a bale, cf. Fig. 3, Fig. 4 and col.5/I.38ff.

EP 1205102 B1 discloses a baler 10 with a baler frame 11, an upper group of rollers 12, and a lower group of rollers 13, cf. Fig. 1 and Fig. 3. The rollers 12, 13 define a bale-forming chamber 14, cf. par. [0034]. The upper rollers 12 are mounted on a roller carrier 15. This roller carrier 15 is mounted on the baler frame 11. It is also possible that the carrier 15 comprises a support frame for the upper rollers 12 and a hood overlying the support frame, cf. par. [0035].

EP 2570022 A1 discloses a combined baler/bale wrapper 1 with a chassis 3 and a roller baler 6, cf. par. [0029] and Fig. 1. This device 1 forms cylindrical bales and wraps them outside of the bale forming chamber, cf. par. [0028]. The roller baler 6 comprises a lower first part 9 and an upper second part 10 which together define a bale forming chamber 12 in which cylindrical bales are formed, cf. [0030]. Several bale rotating rollers 15 can rotate around parallel rotational axes 17, cf. par. [0030] and Fig. 2. Every roller 15 is mounted on a shaft 13. This shaft 13 is carried in a bearing and can rotate around an axis 17, cf. par. [0031]. These rollers 15 extend between segments of the two opposing end walls 14. The rollers 15 and the end walls 14 define a bale forming chamber 12. A bale in the bale forming chamber 12 is rotated around the axis 18, cf. par. [0030] and Fig. 2.

The bale rotating rollers 15 of EP 2570022 A1 define the circumferential periphery 16 of the bale forming chamber 12, cf. par. [0031]. The rollers 15 of the lower part 9 define 180 degrees of the periphery 16. The rollers 15 of the upper part 10 also define 180 degrees of the periphery 16. The upper part 10 is pivotally coupled to the lower part 9 and can be pivoted around a first pivoting axis 22 which runs through the shaft 13a, cf. par. [0033].

The bale forming chamber 12 of EP 2570022 A1 can be enlarged (second volume, second state) by means of a bridging element with a bridging roller 25, cf. [0033]. In the first state the bale rotating roller 15b of the upper part 9 is adjacent to the bale rotating roller 15c of the lower part, cf. Fig. 1 and par. [0036]. In the second state a gap G between the rollers 15b, 15c occurs, cf. Fig. 3. The bridging roller 25 bridges this gap G in the second state. In this second state the periphery 16 is defined by the rollers 15 at the parts 9, 10 and in addition by the bridging roller 25 in the gap G. The bridging roller 25 is rotatably carried on a carrier means with two plate members 26, cf. par. [0037] and Fig. 2. The carrier plate members 26 can be pivoted around the axis 24, cf. Fig. 3. The bridging roller 25 is mounted on a shaft 28 with a sprocket 29, cf. par. [0038] and Fig. 6.

EP 0954958 B1 discloses a round baler (Rundballenpresse R), cf. Fig. 1. A front housing (Gehäuse G) and an ejecting tailgate (Auswurfklappe K) together delimit a pressing chamber (Presskammer P), cf. [0026]. Several pressing rollers (Presswalzen W) surround the pressing chamber P, cf. [0026] and [0027]. In a first state the pressing rollers W1, W2 are arranged adjacent to each other and delimit a nip (Spalte 5), cf. [0027] and Fig. 1. A pressing chamber wall portion A (Presskammer-Wandabschnitt A) carries two further pressing rollers W3, W4, cf. [0028]. Fig. 1 shows the wall portion A in a parking position (Passivstellung). Fig. 2 shows an operating position (Betriebsstellung II) in which the pressing roller W3 is inserted into the enlarged nip S1 between the rollers W1, W2. Fig. 3 shows a further operating position III in which both pressing rollers W3, W4 of the wall portion A are inserted into the further enlarged nip S2. Therefore three different diameters (Querschnittsgrößen Q1, Q2, Q3) can be achieved.

### SUMMARY OF THE INVENTION

A problem solved by the invention is to provide a bale forming apparatus with the features of the preamble of claim 1 and a bale forming method with the features of the preamble of claim 24. wherein the first roller holding device does not necessarily comprise a pivotal arm for changing the chamber size by moving the or at least one moveable bale forming roller of the first set perpendicular to is rotating axis.

This problem is solved by a bale forming apparatus with the features of claim 1 and by a bale forming method with the features of claim 24. Preferred embodiments are specified in the depending claims.

The bale forming apparatus according to the invention comprises a bale forming device. This bale forming device comprises
- a plurality of at least three bale forming rollers (pressing rollers),
- a first roller holding device, and
- a connecting slide.

Every bale forming roller can rotate around its own rotating axis.

At least one bale forming roller can be moved in two opposite directions perpendicular to its own rotating axis between at least two different roller positions. The or at least one moveable bale forming roller and at least one further bale forming roller belong to a first set of rollers. At least one additional further bale forming roller belongs to a second set of rollers. The two sets are disjoint, i.e. no roller belongs to both sets. The or every moveable bale forming roller of the first set can be moved with respect to the second set by moving the roller from one roller position into a further roller position.

A bale forming chamber is positioned between these two sets of bale forming rollers. A round-cylindrical bale can be formed in this bale forming chamber by using the bale forming rollers currently delimiting and surrounding this bale forming chamber.

Moving a bale forming roller of the first set away from the second set increases the size of the bale forming chamber. Thereby the bale forming chamber can take a smaller or minimal chamber size and at least one larger chamber size.

The bale forming rollers of the first set are mounted in a sequence at the first roller holding device. The connecting slide can move along this sequence. Thereby the connecting slide can take at least two different sliding positions with respect to the first set.

In every sliding position the connecting slide connects one bale forming roller of the first set with one bale forming roller of the second set. This connection has the effect that the distance between the two connected bale forming rollers is limited to an upper threshold. Both connected bale forming rollers contribute to delimiting the bale forming chamber.

In a first sliding position the connecting slide connects the or one moveable bale forming roller of the first set with a bale forming roller of the second set. In the or every further sliding position the connecting slide connects the or one further bale forming roller of the first set with a bale forming roller of the second set. This connected further bale forming roller of the first set can also be moveable or can be stationary.

When the connecting slide is in the first sliding position, the moveable bale forming roller of the first set and the connected bale forming roller of the second set contribute to delimit the bale forming chamber but the or at least one further bale forming roller of the first set is spaced apart from the bale forming chamber and does not contribute to delimiting. When the connecting slide is in the or any further sliding position, the moveable bale forming roller of the first set having been connected in the first sliding position and the now connected roller of the first set and the connected roller of the second set contribute to delimiting the bale forming chamber.

This means that - compared with the first sliding position - at least one more bale forming roller (at least three in place of at least two rollers) contributes to delimiting the bale forming chamber when the connecting slide is in the or any further sliding position. Therefore the bale forming chamber with the connecting slide in the or any further sliding position has a larger size than the bale forming chamber with the connecting slide in the first sliding position.

When performing the bale forming method according to the invention, the bale forming apparatus forms in the bale forming chamber at least one round-cylindrical bale in at least two consecutive bale forming phases, namely a small-size bale forming phase and at least one large-size bale forming phase. In the small-size bale forming phase the bale forming chamber has a smaller size or a minimal size. In the or every large-size bale forming phase the bale forming chamber has a larger size. The or at least one large-size bale forming phase is performed before or after the small-size bale forming phase. It is possible that several large-size bale forming phases with different chamber sizes are performed.

In the small-size bale forming phase the connecting slide connects the or one moveable bale forming roller of the first set with a bale forming roller of the second set. In the or every large-size bale forming phase the connecting slide connects the or one further bale forming roller of the first set with a roller of the second set. The moveable bale forming roller of the first set which is connected in the small-size bale forming phase also contributes in the or every large-size bale forming phase to delimiting the bale forming chamber. The or every further bale forming roller of the first set which is connected in the or at least one large-size bale forming phase is spaced apart from the bale forming chamber during the small-size bale forming phase.

### ADVANTAGES

The bale forming apparatus according to the invention can be used for subsequently forming several round-cylindrical bales with different diameters. It is also possible that different equal round balers according to the invention form bales of different diameters. Thereby the bale forming apparatus can better be adapted to different requirements. Thanks to the invention the number of variants and the number of different spare parts are reduced - compared with several balers each having a fixed-sized chamber. Nevertheless bales with different sizes can be formed.

The bale forming apparatus according to the invention can also vary the size of the bale forming chamber while forming one bale. This variation is caused by moving the connecting slide during the bale formation. This movement releases the or one moveable bale forming roller of the first set and enables this roller to move with respect to the second set. Thanks to this variation the pressure applied onto the loose material in the bale forming chamber can be varied. Thereby the pressure can be adapted to the increasing bale size during the bale formation. In addition a bale with a varying material density over the bale diameter can be formed. In particular a bale with a soft core can be formed by using bale forming rollers. The small-size bale forming phase and afterwards the or one large-size bale forming phase are performed while forming one bale.

The bale forming apparatus according to the invention can achieve these effects without the need of using at least one driven pressing belt wherein the or every pressing belt surrounds and delimits a part of the bale forming chamber. In some circumstances such a pressing belt may not operate properly, e.g. may slip over a driven roller due to heavy load or low friction. Therefore the pressing belt may not be conveyed and driven properly. In addition such a pressing belt needs a tensioning device, e.g. a pivotal tensioning arm, which requires space. A pressing belt may be worn and may change its elastic property during operation. The mechanical properties of the or every pressing belt may limit the maximal pressure and therefore the compression applied on the bale in the bale forming chamber which can be achieved. The bale forming apparatus according to the invention avoids the possible disadvantages of a baler with a pressing belt.

Thanks to the invention a baler with variable chamber size and with pressing rollers is provided in which no pivotal lever arm for holding and moving the or every moveable bale forming roller of the first set is required. Such a pivotal lever arm has some disadvantages:
- The bale forming apparatus must provide the space required for different pivotal positions of the lever arm. The available space will limit the maximal possible pivoting angle of the lever arm. Therefore the possible variations in the size of the bale forming chamber can significantly be limited due to the available space for the lever arm.
- A casing around the bale forming chamber must be sufficiently large for providing this space.
- The pivoting lever arm may hit a further part of the baler.
- The pivoting of the lever arm needs to be damped.

The moveable connecting slide according to the invention, however, requires significantly less space and does not significantly limit the possible variations in the chamber size. A smaller baler with a smaller casing can form bales of the same diameters than known balers. As no pivoting arm is required, a baler according to the invention can achieve a larger chamber size variation with the same baler dimensions. In addition thanks to the invention no bridging element is required. Such a bridging element has been proposed and is either inserted into a space between two casing segments (larger chamber size) or is in a parking position in which only the two casing elements surround the bale forming chamber (small chamber size).

Thanks to the connecting slide the two connected bale forming rollers can stand the pressure applied by the loose material in the bale forming chamber onto the surrounding bale forming rollers. It is not necessary to permanently connect these two bale forming rollers with each other - they are only connected with each other as long as the connecting slide is in this sliding position. The connecting slide being moved into a further sliding position releases the two connected rollers. Therefore the connecting slide needs only to be large enough to connect two rollers with each other.

Thanks to the invention it is possible that in every sliding position a drum-shaped bale forming chamber is provided. In every sliding position the connecting slide connects two rollers with each other and releases the further rollers. A bale forming apparatus in which at least one bale forming roller is mounted on a pivotal tensioning device may in some pivotal positions of the tensioning device not provide a substantially drum-shaped bale forming chamber but e.g. a chamber with an elliptic cross-sectional area. This undesired effect reduces the performance of the baler. A bale in the bale forming chamber may be rotated in an eccentric way which causes undesired vibrations. The invention avoids this disadvantage.

### PREFERED EMBODIMENTS

In a preferred embodiment the entire circumferential surface of the bale forming chamber - except an inlet for loose material and perhaps a further inlet for a web of wrapping material - is surrounded and delimited by the plurality of bale forming rollers. No endless pressing belt touches the circumferential surface of a bale in the bale forming chamber. A tensioning device and a drive for the endless belt are therefore saved.

According to the invention the bale forming rollers of the first set are mounted in a sequence on the first roller holder device. Preferably the or one moveable bale forming roller of the first set forms one end roller of this sequence. Preferably the connecting slide being in the first sliding position connects this moveable end roller with a roller of the second set. This embodiment enables the maximal possible variation in the chamber size.

In one embodiment the second set also comprises several bale forming rollers which are mounted in a further sequence at a second roller holding device. The connecting slide can simultaneously move along the bale forming rollers of the first set and along the bale forming rollers of the second set. The bale forming chamber is positioned between these two sequences formed by the two sets of rollers. The bale forming device of this embodiment operates like a zipper with the connecting slide corresponding to the zipper handle.

Preferably the connecting slide in the first sliding position connects two end rollers of the two sets with each other. These two roller sequences form two parallel rows of bale forming rollers when the connecting slide is in the first sliding position. The two rollers which are connected by the connecting slide being in the first sliding position form two end rollers of these sequences.

Preferably the moveable bale forming roller or the ensemble of moveable rollers can be moved in respective roller positions in which every bale forming roller contributes to delimiting the bale forming chamber, i.e. can touch a bale in the bale forming chamber. The connecting slide is in the or one further sliding position. This embodiment provides a bale forming chamber which can achieve the maximal possible size.

In one embodiment at least one bale forming roller of the second set is also moveable perpendicular to its rotating axis. At least one bale forming roller of the first set can be moved away from and towards the second set. At least one bale forming roller of the second set can be moved away from and towards the first set. A movement of a moveable bale forming roller away from the other set increases the size of the bale forming chamber. A movement of a moveable bale forming roller towards the other set decreases the size of the bale forming chamber.

In one embodiment the sequence of the first set comprises two end rollers and at least one intermediate bale forming roller. The one end roller and the or every intermediate roller are moveable in a direction perpendicular to its respective rotating axis. In the first sliding position the connecting slide connects the moveable end roller of the first set with a bale forming roller of the second set. Preferably the connecting slide connects in every further sliding position an intermediate roller or the other end roller with a bale forming roller of the second set. Only the other end roller or no roller of the first set is stationary. Preferably every bale forming roller of the first set and every bale forming roller of the second set contributes to delimiting the bale forming chamber when the connecting slide is in the or one further sliding position and connects the other end roller of the first set with a roller of the second set. Thanks to this embodiment the bale forming chamber can take the maximal possible chamber size.

Preferably the size of the bale forming chamber with the connecting slide connecting the other end roller is at least 1.5 times of the chamber size when the connecting slide is in the first sliding position. This embodiment further increases the flexibility of the bale forming apparatus.

In one embodiment the connecting slide performs a purely linear movement when moving along the sequence from one sliding position into a further sliding position. In one implementation the possible movements of the connecting slide are restricted to a linear movement along the sequence of the first set. It is also possible that the connecting slide performs a curved movement.

In one embodiment the connecting slide can only take a limited number of different sliding positions when moving along the sequence of the first set. It is possible to temporarily lock the connecting slide in a sliding position. In a further embodiment the connecting slide can move continuously along the sequence.

In one implementation a guiding device guides the connecting slide during its movement along the sequence of the first set. This guiding device can be mounted at a casing which surrounds the bale forming chamber while a bale is formed. This guiding device can prevent an undesired lateral shift of the connecting slide, in particular if the loose material in the bale forming chamber is not equally distributed.

In one embodiment the connecting slide is moved from one sliding position into a subsequent sliding position by means of a controlled actuator. This embodiment enables to position the connecting slide at a desired sliding position with respect to the first set. The actuator can comprise at least one piston-cylinder device which can be a double-acting device. A control unit of the bale forming apparatus generates control inputs for the actuator. Preferably a position sensor detects the current position of the connecting slide and the control unit generates control inputs depending on the measured sliding position (closed-loop control). It is also possible that the controlled actuator moves the connecting slide based on a given movement scheme, e.g. in a time-based manner (open-loop control).

The embodiment with the controlled actuator enables to form a bale with a required density of loose material. It is possible to form a bale with a varying density over its diameter. In particular a bale with a soft core having a lower density and a torus, i.e. several layers with a higher density, around the soft core can be formed by controlling the actuator depending on pressure signals. The closed-loop control with the position sensor enables to adapt the pressure applied onto the material in the bale forming chamber to the current diameter of the increasing bale.

In one embodiment a pressure sensor measures a value indicative of the pressure which the loose material in the bale forming chamber applies onto those bale forming rollers which currently delimit the bale forming chamber. This pressure sensor can measure a value indicative of the pressure applied onto at least one moveable bale forming roller.

Preferably the bale forming chamber is surrounded by a casing while a bale is formed in the bale forming chamber. The casing comprises a discharge gate and at least one further casing part. In a further implementation of the pressure sensor the compressed material in the bale forming chamber pivots the discharge gate away from the stationary casing part. The pressure sensor measures the current pivot position of the discharge gate with respect to the stationary casing part. In one implementation the sensor measures the distance over which a locking mechanism for the discharge gate is stretched by the pressure of the material.

According to one embodiment the controlled actuator moves the connecting slide along the sequence of the first set depending on signals from this pressure sensor. This embodiment makes it possible to keep the applied pressure in a given domain and avoids a too high or too low pressure. It is possible that the required pressure domain increases over the bale diameter. The current position of the connecting slide determines the number of delimiting bale forming rollers and thereby the chamber size. The current position is measured and serves as a value indicative of the bale diameter.

In a further embodiment the connecting slide is moved by the pressure which the loose material in the bale forming chamber applies onto the bale forming rollers. Preferably the connecting slide is moved against the retaining force of a retaining device. This retaining device can comprise a spring or a piston-cylinder device. The connecting slide is moved as soon as the applied pressure exceeds the retaining force. This embodiment saves a controlled actuator which moves the connecting slide. It is also possible that a controlled actuator moves the connecting slide against the retaining force or that the connecting slide is moved by the compressed material and the controlled actuator.

In one implementation a position sensor measures the current sliding position of the connecting slide. This sliding position is a value indicative of the current size of the bale forming chamber as moving the connecting slide enables a change of the chamber size.

In one implementation the retaining force which the retaining device applies onto the connecting slide is changed in a controlled manner depending on the measured current sliding position. One possible implementation is that the retaining device comprises a piston-cylinder device and a proportional valve which is opened if the hydraulic pressure reaches a given threshold. The embodiment with the position sensor enables to change the density of the formed bale over its diameter.

In one implementation the retaining device applies a first retaining force onto the connecting slide while the connecting slide is in the first sliding position. The retaining device applies a second retaining force while the connecting slide is in a further sliding position. The second retaining force is higher than the first retaining force. This embodiment enables to create a bale with a soft core having a lower density and a torus around the soft core with a higher density.

In one embodiment every bale forming roller is permanently rotated during the bale forming. In a further embodiment at least one moveable bale forming roller is only rotated as long as this bale forming roller contributes to delimiting the bale forming chamber. In one implementation of this further embodiment a controllable clutch can selectively connect and disconnect a power train for this bale forming roller. If the moveable bale forming roller is spaced apart from the bale forming chamber and is currently not used, this roller operates as an idler roller. This embodiment reduces the required mechanical power and torque as a bale forming roller which is currently not used is also not rotated.

According to the invention the connecting slide connects in every sliding position a roller of the first set with a roller of the second set. In one embodiment the connecting slide keeps the distance between the two connected rollers constant. It is also possible that the distance between the two connected bale forming rollers can be varied but always remains below this upper threshold.

In one embodiment the connecting slide comprises two slide blocks. The two bale forming rollers currently connected by the connecting slide are positioned between these two slide blocks. In one implementation the two connected rollers comprise axles or shafts which are rotatably kept by both slide blocks, e.g. in apertures in the slide blocks.

In one implementation the connecting slide comprises two slide parts wherein every slide part can connect two bale forming rollers with each other when being in a connecting position. Every slide part can be moved along the sequence into different sliding positions. During the bale formation one sliding part is in an active position and connects two bale forming rollers which with each other wherein the connected bale forming rollers currently contribute to delimiting the bale forming chamber. The other sliding part is in a parking position and connects two further bale forming rollers which each other which are currently spaced apart from the bale forming chamber.

Moving the connecting slide from one sliding position into a further sliding position is in this embodiment performed as follows: The sliding part currently being in the active position releases the connected rollers and is moved away from the bale forming chamber and passes the other sliding part currently being in the parking position. The other sliding part is now in the active position and the two rollers connected by the other sliding part now contribute to delimiting the bale forming chamber. The other sliding part is not necessarily moved. The moved sliding part is now in the parking position. This embodiment increases a mechanical stability.

It is also possible that one slide part is kept in the parking position during the entire bale forming and is only used if the slide part in the active position does not work properly, e.g. can no longer stand the applied pressure. This embodiment provides redundancy.

In one embodiment the connecting slide connects in every sliding position a different bale forming roller of the first set with a different bale forming roller of the second set. The first set has at least as much bale forming rollers than different sliding positions are possible. The second set also has at least as much bale forming rollers than possible sliding positions exist. In an alternative embodiment the same bale forming roller of the second set is connected with two different bale forming rollers of the first set with the connecting slide being in two different sliding positions. With other words: The same roller of the second set can be connected with two different rollers of the first set.

By definition the connecting slide can reach every bale forming roller of the first set and every bale forming roller of the second set. With other words: The two sets are formed by that bale forming rollers which can be reached and connected by the connecting slide. In one embodiment the connecting slide can reach every bale forming roller, i.e. every bale forming roller either belongs to the first set or to the second set. In an alternative embodiment the bale forming device comprises at least one further bale forming roller which permanently contributes to delimiting the bale forming chamber and which cannot be reached by the connecting slide. This further bale forming roller does therefore neither belong to the first set nor to the second set. This further bale forming roller which neither belongs to the first set nor to the second set can be stationary or can be moveable perpendicular to its rotating axis, e.g. by a roller actuator. An example for such a further bale forming roller is a pair of two driven stationary starter rollers which delimit from two sides an inlet for loose material wherein this inlet guides into the bale forming chamber.

In one embodiment a first flexible roller connector connects the bale forming rollers of the first set with each other. Preferably the second set also comprises several rollers. A second flexible roller connector connects the bale forming rollers of the second set with each other. Thanks to the respective roller connector the bale forming rollers of one set can move relative to each other but the distance between two adjacent bale forming rollers is kept below an upper threshold - even if the compressed material in the bale forming chamber applies an expanding pressure onto the bale forming rollers. Every flexible roller connector can comprise chains or rods or just ropes or further elongated elements connecting the roller axles or shafts.

The embodiment with the flexible roller connector implements an easy way to provide a drum-shaped bale forming chamber in every sliding position of the connecting slide: The expanding pressure of the injected loose material and the principle of minimal entropy automatically arrange those bale forming rollers of both sets which currently delimit the bale forming chamber substantially along a circle such that the bale forming chamber has a drum-like shape. The roller connector can be implemented as a passive mechanical part. Thanks to the roller connector no controlled actuator for moving the bale forming rollers from one roller position into a further roller position is required. Of course a drive for rotating the bale forming rollers around their rotating axes is necessary. It is also possible that only the bale forming rollers of the first set or of the second set are connected with each other by a flexible roller connector.

In one implementation the connecting slide can glide over the or every flexible roller connector. In every sliding position the connecting slide is adjacent to a roller pair with one roller of the first set and one roller of the second set. The connecting slide is connected with both flexible roller connectors in two connecting areas positioned closed to the adjacent roller pair. The connecting slide keeps the distance between the two connecting areas below a given threshold. It is not necessary that the connecting slide is directly connected with a bale forming roller.

According to the invention at least one bale forming roller of the first set is moveable between at least two roller positions. Preferably the bale forming rollers provide a drum-shaped bale forming chamber in every sliding position of the connecting slide. The diameter of this bale forming chamber depends on the sliding position. In one implementation the or every moveable bale forming roller can be moved from one roller position into a further roller position by a movement radially away from the or towards the center axis of the drum-shaped bale forming chamber.

In one embodiment two bale forming rollers of the first set are connected with each other by the first flexible roller connector such that the distance between the parallel rotating axes of these two rollers remains constant. At least one roller of this pair is moveable perpendicular to its own rotating axis. This roller pair can be moved with respect to the further bale forming rollers of the first set and with respect to the second set. One roller of the pair can rotate around the other roller of this pair. The first set can comprise several such roller pairs. This embodiment even increases the robustness of the bale forming apparatus.

In one embodiment the flexible roller connector is or can be set under tension to move the or at least one moveable bale forming roller against the compressed loose material in the bale forming chamber, thereby tending to reduce the chamber size. This tension can be effected actively by an actuator or passively, e.g. by an elastic implementation of the flexible roller connector. This embodiment ensures a high pressure onto compressed loose material in the bale forming chamber.

In one embodiment at least one moveable bale forming roller of the first set is guided by a guiding device, e.g. by a left guiding rail and a right guiding rail in which the roller shaft or axle is guided. This guiding device restricts the possible movements of the moveable bale forming roller to a movement in two opposite directions perpendicular to its rotating axis. The guiding device does preferably not restrict a rotation of the bale forming roller around its own rotating axis. It is possible that for every moveable bale forming roller of the first set an own guiding device is provided. In one implementation also the moveable bale forming rollers of the second set have own guiding devices.

In one embodiment every moveable bale forming roller of the first set is guided by this guiding device. This guiding device belongs to the first roller holding device and holds and keeps the rollers of the first set in the sequence. Preferably this guiding device is mounted at a casing for the bale forming chamber. This casing surrounds the bale forming chamber while a bale is formed in the bale forming chamber. The guiding device guides the or every moveable bale forming roller of the first set while the bale forming roller moves from one roller position to a further roller position. This guiding device ensures that the distance between two adjacent bale forming rollers is kept within a given range such that substantially no loose material can leave the bale forming chamber. A similar guiding device for the second set can also be provided, preferably also mounted at the casing.

According to the invention the bale forming chamber is arranged between the first set and the second set of bale forming rollers. Preferably the bale forming chamber is surrounded by a casing while a bale is formed in the bale forming chamber. The casing comprises a discharge gate and at least one further casing part. For ejecting the bale out of the bale forming chamber the discharge gate is pivoted away from the further casing part. Preferably the bale forming rollers of the first set are mounted at one casing part, e.g. at the further casing part, and the bale forming rollers of the second set are mounted at the other casing part, e.g. at the pivotal discharge gate. The rollers of one set are pivoted away from the rollers of the other set when the discharge gate is opened. Thanks to this embodiment no bale forming roller forms an obstacle for ejecting the formed bale out of the bale forming chamber. It is possible that the guiding device for the bale forming rollers of one set is mounted at the further casing part and the guiding device for the bale forming rollers of the other set is mounted at the discharge gate.

It is also possible that in place of or additional to a guiding device a lever device carries a moveable bale forming roller. In one implementation a moveable bale forming roller is mounted between two lever arms. The roller shaft is carried by the free ends of the two lever arms. The lever arms are rotatably mounted at a casing or a frame of the baler. Thanks to the connecting slide this implementation takes less space than a lever arrangement as known from the prior art.

In one implementation the pressure of the injected loose material tends to move the or one moveable bale forming roller of the first set along the guiding device away from the second set. Preferably the moveable bale forming roller is moved against the retaining force of a retaining device. This roller retaining device tends to move the bale forming roller towards the second set, thereby decreasing the chamber size. The roller retaining device can be implemented as a purely passive device. In a further implementation a controlled roller actuator moves the bale forming roller along the guiding device. It is possible that a roller actuator moves the bale forming roller against the retaining force of the roller retaining device away from the second set.

Preferably a feeding device injects loose material through an inlet into the bale forming chamber. In one embodiment the connecting slide moves from the first sliding position into the further sliding position or stepwise into several subsequent further sliding positions. When doing so the connecting slide moves in a sliding direction away from the inlet for loose material. This movement increases the chamber size. The or every moveable bale forming roller can be moved from one roller position into a further roller position by being moved in a roller movement direction. Preferably this roller movement direction is perpendicular to the sliding direction. This embodiment enables the largest and quickest possible variation in the chamber size.

In one embodiment the or at least one moveable bale forming roller of the first set is moved while a bale is formed under pressure in the bale forming chamber. This movement is caused by or connected with a movement of the connected slide from the first sliding position into a further sliding position. This movement of the bale forming roller increases the size of the bale forming chamber. This embodiment enables that during the entire bale formation at least some bale forming rollers are in contact with the loose material in the bale forming chamber and apply sufficient pressure onto the loose material. A smaller chamber is provided in the beginning of the bale formation and a larger chamber is provided later when additional loose material is injected into the bale forming chamber.

In one application the bale forming apparatus forms a round-cylindrical bale with a first diameter. After the formation of this bale is completed, the formed bale is ejected out of the bale forming chamber and the connecting slide is moved from one sliding position into a further sliding position. Subsequently the bale forming apparatus forms a further round-cylindrical bale with a second diameter. The second diameter is larger or smaller than the first one. While the bale with the smaller diameter is formed, the connecting slide connects at least temporarily one moveable bale forming roller of the first set with a roller of the second set. Thanks to this application the same bale forming apparatus can selectively create bales with different diameters and can better be adapted to given requirements.

In one implementation of this application the connecting slide is in the first sliding position and connects the moveable end roller of the first set with a roller of the second set. In a further embodiment the connecting slide connects a further moveable roller of the first set with a roller of the second set. This moveable bale forming roller is not connected and also contributes to delimiting the bale forming chamber when the larger bale is formed.

In one application the bale forming apparatus according to the invention can form a bale with a required diameter wherein the diameter is selected out of a given set or range of possible diameters. Every selectable diameter corresponds to one sliding position of the connecting slide.

In one application the bale forming apparatus belongs to a vehicle which drives or which is pulled over ground and picks up loose material from the ground. The vehicle may be an agricultural harvester. This agricultural harvester can be self-propelled or can be pulled by a pulling vehicle, e.g. by a tractor or combine harvester or field chopper. In a further application the bale forming apparatus belongs to a stationary plant which forms under pressure bales from cartridges, papers, or other recycling material.

These and other aspects of the invention and of the preferred embodiment will be even more apparent from the detailed embodiment as described below and will be elucidated in detail there.

### BRIEF DESCRIPTION OF THE DRAWINGS

Fig. 1 shows the bale forming apparatus with an embodiment of the invention in the beginning of forming a bale with the bale forming chamber having the minimal size;
Fig. 2 shows the bale forming apparatus of Fig. 1 in an intermediate situation and with an intermediate chamber size;
Fig. 3 shows the bale forming apparatus of Fig. 2 at the end of the bale formation with the maximal chamber size.

### DETAILED DESCRIPTION OF EMBODIMENT

In the embodiment the invention is used on a bale forming device 9 which forms subsequently several round-cylindrical bales B in a drum-shaped bale forming chamber 12. Fig. 1 shows this bale forming device 9 in the beginning of the process of forming a round-cylindrical bale B. The bale forming chamber 12 has its minimal possible size and the bale B is quite small. Fig. 2 shows the bale forming chamber 12 and the bale B in an intermediate size. Fig. 3 shows the bale forming chamber 12 and the bale B with the maximal possible size.

The bale forming device 9 belongs to a bale forming apparatus (baler 1) implemented as a non-propelled vehicle. The baler 1 is mechanically connected with a pulling tractor 20. The bale forming device 9 is mounted on and carried by a chassis 2. An axle carries two wheels 3 and is rotatably mounted at the chassis 2. An input shaft 4 of the round baler 1 is mechanically connected with a rotated PTO shaft of the pulling tractor 20. This input shaft 4 drives several rotated part of the round baler 1. The tractor 20 pulls the vehicle with the baler 1 in a travelling direction TD over ground.

A pick-up unit 6 with a rotated pick-up drum picks up loose crop material (hay, straw, grass, e.g.) from the ground. The picked-up crop material is guided through a feeding channel 5 towards a crop material inlet 7. This inlet 7 is delimited by two driven starter rollers 8.1, 8.2.

In the embodiment an undershot conveyor 22 and a subsequent overhead conveyor rotor 25 engage from above and from below into the feeding channel 5. The two subsequent conveyor rotors 22, 25 (only schematically shown) convey the picked-up crop material through the feeding channel 5 towards the crop material inlet 7. In one implementation a cutting device (not shown) engages from below into the feeding channel and cuts the conveyed crop material.

The bale forming chamber 12 is surrounded and delimited by the two driven starter rollers 8.1, 8.2 delimiting the inlet 7 and by further driven bale forming rollers (pressing rollers) which are also driven, e.g. by chains near one sidewall of the bale forming chamber 12 or by shafts. Preferably several longitudinal ribs are mounted on the circumferential surface of a bale forming roller. Every such rib extends parallel to the rotating axis of the roller. An embodiment for such a roller with ribs is described in US 5,752,437.

A subset of these further bale forming rollers form two sets 10 and 11 of bale forming rollers. The bale forming rollers of the first set 10 are denoted by 10.1, ..., 10.6 and the bale forming rollers of the second set 11 by 11.1, ..., 11.6. The bale forming rollers 10.1, ..., 10.6 of the first set 10 are positioned in a first sequence comprising the two end rollers 10.1, 10.6. The bale forming rollers 11.1, ..., 11.6 of the second set 11 are positioned in a second sequence comprising the two end rollers 11.1, 11.6. The bale forming chamber 12 and therefore also the increasing bale B is positioned between the first set 10 and the second set 11 of bale forming rollers. In addition the bale forming chamber 12 is delimited by the starter rollers 8.1, 8.2 and the driven bale forming rollers 23.1, 23.2, 24.1, 24.2 which do not belong to the sets 10, 11 (to be explained below).

The rotating axes of the rollers 10.1, ..., 10.6, 11.1, ..., 11.6, 23.1, ..., 24.2, 8.1, 8.2 are perpendicular to the travelling direction TD of the baler 1 and perpendicular to the drawing plane of Fig. 1 to Fig. 3 and parallel to each other and to the center axis of the drum-shaped bale forming chamber 12. Two adjacent bale forming rollers are positioned closely adjacent to each other such that substantially no crop material can leave the bale forming chamber 12 through a gap between these two adjacent bale forming rollers. On the other hand the circumferential surface of one bale forming roller does not touch the circumferential surface of an adjacent bale forming roller.

While a bale B is formed in the bale forming chamber 12, a casing surrounds the bale forming chamber 12. This casing comprises a stationary front housing 21 and a pivotal tailgate (discharge gate) 13. The stationary front housing 21 is mounted on the chassis 2. The tailgate 13 can be pivoted by a hydraulic tailgate actuator (not shown) upwards against the force of gravity and can pivot downwards around the axis 14. Fig. 1 to Fig. 3 show the tailgate 13 in the closed position.

When the tailgate 13 is entirely opened, an aperture is provided between the stationary front housing 21 and the tailgate 13 and the bale B can be ejected out of the bale forming chamber 12 through this aperture. In one implementation the angle around which the tailgate 13 is pivoted and therefore the width of the provided aperture depends on the measured diameter of the formed bale. The larger the bale is the larger is the provided pivoting angle of the tailgate 13.

In the embodiment both starter rollers 8.1, 8.2, the bale forming rollers 10.1, ..., 10.6 of the first set 10 and the further bale forming rollers 23.1, 23.2, 24.1 are rotatably mounted at the stationary front housing 21. The bale forming rollers 11.1, ..., 11.6 of the second set 11 and the further bale forming roller 24.2 are rotatably mounted at the pivotal tailgate 13. Thereby a sufficiently large aperture (between the rollers 24.1 and 24.2) is provided when the tailgate 13 is in the fully opened position. In one alternative implementation the bale forming roller 24.1 is also mounted at the tailgate 13 and the bale ejecting aperture is provided between the rollers 8.2 and 24.1. The bale forming chamber 12 is positioned between the rollers 10.1, ..., 10.6, 23.1, 23.2, 8.1 mounted at the front housing 21 on the one side and the rollers 11.1, ..., 11.6, 24.2 mounted at the tailgate 13 and the starter roller 8.2 and the further roller 24.1 at the other side.

In the embodiment the two starter rollers 8.1, 8.2 and the adjacent bale forming rollers 24.1, 24.2 are stationary mounted, i.e. can only rotate around their own rotational axes. The two bale forming rollers 10.6, 11.6 can only slightly be moved in a direction perpendicular to their respective rotating axes. Every further bale forming roller 10.1, ..., 10.5, 11.1, ..., 11.5, 23.2, 24.2, however, can laterally be shifted over a significant distance between an inner position and an outer position in a direction perpendicular to its rotating axis, i.e. in a direction in the drawing plane of Fig. 1. The inner position is shown in solid lines in Fig. 1 and the outer position in dashed lines. The possible movement between the inner position and the outer position of a moveable bale forming roller is indicated in Fig. 1 to Fig. 3 by dotted arrows.

In one embodiment a set of left guiding members, e.g. a set of guiding rails, is mounted at the inner surface of the left sidewall of the casing 21, 13. A set of right guiding members, e.g. a further set of guiding rails, is mounted at the inner surface of the right sidewall. The terms "left" and "right" refer to the travelling direction TD of the round baler 1. The bale forming chamber 12 extends between these two guiding members. The two ends of the shaft of a moveable bale forming roller are guided in two guiding members, e.g. in two parallel guiding rails. The two guiding members for a roller shaft limit the possible movements of a roller with respect to the sidewalls to a movement between the inner position and the outer position as indicated in Fig. 1. The guiding members for the first set 10 and for the roller 23.2 are mounted at the sidewall parts belonging to the front housing 21 and the guide members for the second set 11 and for the roller 24.2 are mounted at the sidewall parts for the pivotal tailgate 13. In one implementation a moveable bale forming roller can move stepwise along the guiding rails and is temporarily locked at the guiding rails in a roller position.

A first flexible roller connector 17 connects all bale forming rollers 10.1, ..., 10.6 of the first set 10 and the rollers 23.1, 23.2 with each other (eight connected rollers). A second flexible roller connector 18 connects the bale forming rollers 11.1, ..., 11.6 of the second set 11 and the rollers 24.1, 24.2 with each other. In one implementation every flexible roller connector 17, 18 restricts the possible movement of one bale forming roller with respect to the adjacent bale forming roller to a rotation of the rotating axis of one bale forming roller around the rotating axis of the other bale forming roller. The distance between the two rotating axes of the two adjacent bale forming rollers is limited to an upper threshold. The first flexible roller connector 17 is mounted at the front housing 21. The second flexible roller connector 18 is mounted at the tailgate 13. When the tailgate 13 is pivoted upwards, the bale forming rollers 24.1, 24.2, 11.1, ..., 11.6 and the second flexible roller connector 18 are also pivoted upwards.

In one embodiment every flexible roller connector 17, 18 comprises two chains or other pulling lines or a set of rods or further elongated elements which are mounted at the left sidewall and the right sidewall, resp., of the corresponding casing part and which are connected with the roller shafts. A roller shaft cannot move relative to such a chain or pulling line. Preferably every flexible roller connector 17, 18 keeps the distance between two adjacent bale forming rollers above a minimal threshold such that substantially no crop material can leave the chamber 12 and the circumferential surfaces of the two adjacent rollers do not come in contact with each other.

The subsequent conveyors 22, 25 inject picked-up loose crop material in the bale forming chamber 12. The injected crop material applies an expanding force and therefore a pressure onto those bale forming rollers which currently delimit the bale forming chamber 12. This applied pressure and the flexible roller connectors 17, 18 provide a drum-shaped bale forming chamber 12. Therefore a bale with a shape near an ideal cylinder is formed in the bale forming chamber 12.

In addition one roller of the first set 10 and one roller of the second set 11 are releasable and preferably temporarily connected with each other by means of a connecting slide 16. The two connected rollers form a roller pair. The connecting slide 16 can simultaneously move along both sequences of the two sets 10, 11. The bale forming rollers which can be reached and connected by the connecting slide 16 form the two sets 10, 11. The reachable rollers at the front housing 21 form the first set 10 and the reachable rollers at the tailgate 13 the second set 11. The bale forming chamber 12 is positioned between these two sets 10, 11. The starter rollers 8.1, 8.2 and the further bale forming rollers 23.1, ..., 24.2 cannot be reached by the connecting slide 16 and do therefore not belong to the sets 10, 11. The connecting slide 16 can move from one end roller pair 10.1, 11.2 to the other end roller pair 10.6, 11.6 by linear movements.

In one implementation the connecting slide 16 comprises a left slide block 19.1 and a corresponding right slide block (not shown). Seen in a viewing direction perpendicular to the drawing plane of Fig. 1 the bale forming rollers 10.1, ..., 11.6 of the two sets 10, 11 are positioned between these two slide blocks 19.1.

In one implementation at least one traversal bearing rigidly connects the two slide blocks 19.1of the connecting slide 16 with each other. The or one transversal bearing is preferably positioned such that the two currently connected bale forming rollers are positioned between the bale forming chamber 12 and the traversal bearing. The circumferential surface of a bale B in the bale forming chamber 12 is spaced apart from the transversal bearing. In one implementation a left guiding rail is mounted at the left sidewall of the front housing 21 and guides the left slide block 19.1. A right guiding rail is mounted at the right sidewall and guides the right slide block.

In one implementation the axles or shafts of the two connected rollers are rotatably kept by the two sliding blocks 19.1. For moving the connecting slide from one sliding position into a further sliding position the slide blocks 19.1 are moved such that the shafts or axles of the connected rollers are released.

In a further implementation the left slide block 19.1 is connected with the left parts of the flexible roller connectors 17, 18 and can glide over both left parts. The right side block is connected with the corresponding right parts of the connectors 17, 18 and can glide over both right parts. The slide blocks 19.1, are not directly connected with the bale forming rollers. In every sliding
position the slide blocks 19.1 keep the distance between the two roller connectors 17, 18 in two connecting areas below a given threshold and connect in this way two rollers with each other.

In one embodiment the left slide block 19.1 is connected with the respective left parts of both flexible roller connectors 17, 18. The corresponding right slide block is connected with the respective right parts of both flexible roller connectors 17, 18. In this embodiment the connecting slide 16 can move simultaneously along the first set 10 and the second set 11, e.g. by sliding along the two flexible roller connectors 17, 18. The slide blocks 19.1 divide the first connector 17 into two connector segments 17.1, 17.2 and divide the second connector 18 into two further connector segments 18.1, 18.2. The two connector segments 17.2, 18.2 are positioned between the stationary bale forming roller 23.1 and 23.2, resp., and the slide blocks 19.1. The other two connector segments 17.1, 18.1 are positioned between the end bale forming rollers 10.6 and 11.6, resp., and the slide blocks 19.1.

In the embodiment a retaining device (not shown) tends to move the connecting slide 16 towards the crop material inlet 7. As long as no crop material is injected into the bale forming chamber 12, this retaining device keeps the connecting slide 16 in the initial position near the crop material inlet 7 as shown in Fig. 1. As the connecting slide 16 is connected with both flexible roller connectors 17, 18, every bale forming roller of the sets 10, 11 is kept in the inner position as shown in Fig. 1. The two sets 10, 11 form two parallel rows of rollers.

In one implementation the retaining device operates as a purely passive device, e.g. comprises springs. In a further implementation the retaining device applies a retaining force onto the connecting slide 16 which can be changed in a controlled manner. This implementation enables to form a bale with a desired and possibly varying density over the bale diameter.

In one implementation a position sensor measures the current sliding position of the connecting slide 16 with respect to the two sets 10, 11. This sliding position determines the chamber size. The retaining force is changed depending on the measured sliding position.

The connecting slide 16 with the slide blocks 19.1 can be moved away from the crop material inlet 7 as well as towards the crop material inlet 7 as indicated by the solid double-headed arrow. When moving the
connecting slide 16 away from the crop material inlet 7, the connecting slide 16 is stepwise moved into several different sliding positions with respect to the two sets 10, 11. In every sliding position the connecting slide 16 connects a roller of the first set 10 with an adjacent roller of the second set 11. Every roller of the sets 10, 11 which is not connected by the connecting slide 16 and which is positioned between the connecting slide 16 and the crop material inlet 7 is released and contributes to delimiting the bale forming chamber 12 and can be moved out of the inner position towards the outer position. The connector segments 17.2, 18.2 hold these rollers. The pressure of the crop material in the bale forming chamber 12 enforces such a movement. The possible movement of such a released bale forming roller is limited by the guide members and by the respective flexible roller connector 17 or 18. Every not connected roller of the set 10, 11 behind the connecting slide 16 is kept in the inner position by a flexible roller connector 17 or 18 (more precisely the connector segments 17.1, 18.1) and is spaced apart from the bale forming chamber 12.

In every sliding position the two bale forming rollers 10.1, 11.1, 10.2, 11.2, ... which are currently connected by the connecting slide 16 contribute to delimiting the bale forming chamber 12. In addition to the currently connected two bale forming rollers, the bale forming chamber 12 is delimited by the two starter rollers 8.1, 8.2, the bale forming rollers 23.1, ..., 24.2, and every further bale forming roller 10.1, ..., 10.6 of the first set 10 and every bale forming roller 11.1, ..., 11.6 of the second set 11 which is positioned between the two connected bale forming rollers and the two starting rollers 8.1, 8.2 and is kept by the connector segments 17.2, 18.2.

In the embodiment one bale B is created in six subsequent bale forming phases. The connecting slide 16 is moved into six sliding positions. Every movement of the connecting slide 16 from one sliding position into the subsequent sliding position is performed between two subsequent bale forming phases and increases the size of the bale forming chamber 12.

Fig. 1 to Fig. 3 show three different sliding positions of the connecting slide 16, namely two end positions (Fig. 1, Fig. 3) and one intermediate position (Fig. 2). In the initial situation of Fig. 1 the bale forming chamber 12 is delimited by eight bale forming rollers, namely the two connected end rollers 10.1, 11.1 of the two sets 10, 11, the two starter rollers 8.1, 8.2 and the four further bale forming rollers 23.1, ..., 24.2. The small-size bale forming phase is performed with the connecting slide 16 being in the first sliding position which forms the initial situation of Fig. 1. The bale forming chamber 12 has the smallest possible chamber size.

In the intermediate situation of Fig. 2 the bale forming chamber 12 is delimited by twelve bale forming rollers, among them the two connected bale forming rollers 10.3, 11.3, two further moveable rollers 10.1, 10.2 of the first set 10, and two further moveable rollers 11.1, 11.2 of the second set 11. In the final situation of Fig. 3 the bale forming chamber 12 is delimiting by all 18 bale forming rollers, among them by all bale forming rollers of both sets 10, 11 (maximal chamber size).

In the initial situation of Fig. 1 ten bale forming rollers 10.2, ..., 10.6, 11.2, ...11.6 are spaced apart from the bale forming chamber 12 and do not contribute to delimit the bale forming chamber 12 but belong to two parallel rows of rollers. The flexible roller connectors 17, 18 and the connecting slide 16 keep these ten bale forming rollers which are spaced apart from the bale forming chamber 12 into the respective inner position. In the intermediate situation of Fig. 2 six bale forming rollers 10.4, ..., 10.6, 11.4, ..., 11.6 are spaced apart from the bale forming chamber 12 and are kept in the inner position. In the final situation of Fig. 3 (maximal chamber size) no bale forming roller is spaced apart from the bale forming chamber 12.

In the embodiment as shown in Fig. 1 to Fig. 3 the connecting slide 16 with the slide blocks 19.1 can be moved into six different sliding positions with respect to the two sets 10, 11. While a bale B is formed in the bale forming chamber 12, the connecting slide 16 is stepwise moved from the initial sliding position as shown in Fig. 1 via four intermediate sliding positions, among them the position of Fig. 2, into the final sliding position of Fig. 3. This movement shortens the connector segments 17.1, 18.1 and prolongs the connector segments 17.2, 18.2. Every movement of the connecting slide 16 from one sliding position into the next sliding position increases the diameter of the bale forming chamber 12 as the two bale forming rollers connected in this sliding position and every previously connected bale forming roller contribute to delimiting the bale forming chamber.

In the embodiment every movement of the connecting slide 16 from one sliding position into the next sliding position is performed against the retaining force of the retaining device mentioned above (not shown). The retaining device tends to shift the connecting slide 16 towards the crop material inlet 7. As further crop material is injected through the crop material inlet 7 into the bale forming chamber 12, the pressure which the crop material in the bale forming chamber 12 applies onto the delimiting bale forming rollers increases. In the embodiment the starter rollers 8.1, 8.2 and the rollers 23.1, 23.2 can only rotate around their own rotational axes. The two flexible roller connectors 17, 18 keep the delimiting bale forming rollers in their respective positions and inhibit the lateral movement of a delimiting bale forming roller which would increase the chamber diameter. The applied pressure can only be reduced by shifting the connecting slide 16 away from the inlet 7 and thereby increasing the chamber size.

As soon as the expanding pressure which the crop material applies onto the delimiting bale forming rollers exceeds a given threshold, the pressure surpasses the retaining force of the retaining device. Thereby the connecting slide 16 is shifted by the pressure and against the retaining force into the next sliding position. Two further bale forming rollers delimit the bale forming chamber which were spaced apart from the bale forming chamber 12 in the previous sliding position. The pressure of the crop material in the bale forming chamber and the two flexible roller connectors 17, 18 automatically position the delimiting bale forming rollers in a circle around the bale forming chamber 12 such that an amended drum-shaped bale forming chamber 12 with an enlarged size is formed. The pressure in the enlarged chamber is reduced. Every bale forming roller of the sets 10, 11 is moved stepwise from the inner position via several intermediate positions to the outer position.

In the implementation as just described the crop material in the bale forming chamber 12 shifts the connecting slide 16 against the force of the retaining device away from the crop material inlet 7. It is also possible that the connecting slide 16 is moved in a controlled manner by a positioning device, e.g. by a hydraulic linear actuator. This positioning device can shift the connecting slide 16 from one sliding position to a subsequent sliding position against the retaining force. Or the positioning device replaces the retaining device.

Preferably a position sensor measures the current sliding position of the connecting slide 16. Preferably a further sensor measures the pressure which the crop material in the bale forming chamber 12 applies onto the bale forming rollers, e.g. by measuring the tension which is applied onto the flexible roller connectors 17, 18. In a further implementation the pivotal position of the tailgate 13 with respect to the front housing 21 is measured, e.g. by measuring the distance over which a locking device for the tailgate 13 is stretched by the pressure applied by the crop material on the bale forming rollers. A control unit automatically processes signals from the position sensor and from the pressure sensor and generates control inputs for the positioning device which can move the connecting slide 16 along the sets 10, 11.

In the implementation just sketched the connecting slide 16 can only take a limited number of different sliding positions with respect to the two sets 10, 11. The retaining device tends to keep the connecting slide 16 in the current sliding position. In a further implementation the connecting slide 16 can continuously move along the two sets 10, 11. In this further implementation those two bale forming rollers serve as the connected bale forming rollers which delimit the bale forming chamber 12 and which are next to the connecting slide 16. The continuously moveable connecting slide 16 can also be moved by the crop material pressure or by the positioning device against the retaining force.

In the implementation just described the bale forming rollers are guided by the guide members in the sidewall and are kept in their positions by the flexible roller connectors 17, 18. In a further implementation a roller actuator can move at least some of the moveable bale forming rollers of the sets 10, 11 perpendicular to their rotating axes. This roller actuator can be combined with the guiding members and with the flexible roller connectors 17, 18. It is also possible that the embodiment with the roller actuator(s) is used in place of the flexible roller connectors 17, 18.

It is also possible that a roller biasing member tends to shift a bale forming roller into the inner position and that the crop material pressure tends to move this bale forming roller against the biasing force into the outer position.

In every implementation described up to now one bale B is formed in the increasing bale forming chamber 12 during six subsequent bale forming phases. Of course the connecting slide can take a different number of different sliding positions such that a different number of bale forming phases is performed for forming the bale B. The connecting slide 16 is moved while the bale is formed.

In a further implementation the same bale forming apparatus 1 subsequently forms bales of different diameters. The final diameter of a formed bale B is defined by the only or the last sliding position which the connecting slide 16 takes during the bale formation and before the bale is ejected out of the bale forming chamber 12. The bale forming apparatus 1 according to the embodiment of Fig. 1 to Fig. 3 can form bales of six different diameters according to the six different possible sliding positions of the connecting slide 16. It is possible to finish the bale formation with the connecting slide 16 being in an intermediate sliding position, e.g. that of Fig. 2, or even being in the initial situation of Fig. 1. This embodiment will deliver smaller bales - compared with achieving the final sliding position of Fig. 3.

It is possible that the connecting slide 16 remains in one sliding position during the entire formation of a bale and is moved after one bale is completely formed and before a further bale with a different desired bale diameter is to be formed.

Reference signs used in the claims will not limit the scope of the claimed invention. The term "comprises" does not exclude other elements or steps. The articles "a", "an", and "one" do not exclude a plurality of elements.

**LIST OF REFERENCE SIGNS**

| | |
|---|---|
| 1 | bale forming apparatus comprising the frame 2, the wheels 3, the pick-up unit 6, and the bale forming device 9 |
| 2 | baler chassis, carries the bale forming device 9 |
| 3 | wheels, mounted at the chassis 2 |
| 4 | input shaft for driving the bale forming rollers 10.1, ..., 10.6, 11.1, ...11.6, 23.1, ..., 24.2, 8.1, 8.2 and the pick-up drum 6 |
| 5 | feeding channel, guides picked-up crop material to the crop material inlet 7 |
| 6 | rotated pick-up unit |
| 7 | crop material inlet between the rollers 8.1 and 8.2, guides into the bale forming chamber 12 |
| 8.1, 8.2 | starter rollers, delimit the crop material inlet 7 |
| 9 | bale forming device, comprises the driven bale forming rollers 10.1, ..., 10.6, 11.1, ... 11.6, 23.1, ..., 24.1, 8.1, 8.2 and the connecting slide 16 and the roller connectors 17, 18 |
| 10 | first set of bale forming rollers, consists of the rollers 10.1, ..., 10.6 |
| 10.1 | moveable end roller of the first set 10 |
| 10.2-10.5 | intermediate moveable bale forming rollers of the first set 10, positioned between the end rollers 10.1, 10.6 |
| 10.6 | a substantially stationary bale forming roller forming an end roller of the first set 10 |
| 11 | second set of bale forming rollers, consists of the rollers 11.1, ..., 11.6 |
| 11.1 | moveable end roller of the second set 11 |
| 11.2 to 11.5 | intermediate moveable bale forming rollers of the second set 11, positioned between the end rollers 11.1, 11.6 |
| 11.6 | a substantially stationary bale forming roller forming an end roller of the second set 11 |
| 12 | drum-shaped variable bale forming chamber, surrounded by the stationary front housing 21 and the pivotal tailgate 13, in the maximal size delimited by the bale forming rollers 10.1, ..., 10.6, 11.1, ..., 11.6, 23.1, ..., 24.2, 8.1, 8.2 |
| 13 | pivotal tailgate |
| 14 | pivoting axis of the tailgate 13 |
| 15 | displacement mechanism for the bale forming rollers of the sets 10, 11, comprises the connecting slide 16 and in one implementation a slide actuator (not shown) and in a further implementation a slide retaining mechanism (not shown) |
| 16 | connecting slide, comprises the slide blocks 19.1 |
| 17 | first flexible roller connector, connects the bale forming rollers 10.1, ...,10.6 of first set 10 with each other, belongs to the first roller holding device |
| 17.1 | connector segment of the first roller connector 17 formed between the end roller 10.6 and the connecting slide 16 |
| 17.2 | connector segment of the first roller connector 17 formed between the roller 23.1 and the connecting slide 16 |
| 18 | second flexible roller connector, connects the bale forming rollers 11.1, ..., 11.6 of the second set 11 with each other, belongs to the second roller holding device |
| 18.1 | connector segment of the second roller connector 18 formed between the end roller 11.6 and the connecting slide 16 |
| 18.2 | connector segment of the second roller connector 18 formed between the roller 24.1 and the connecting slide 16 |
| 19.1 | slide blocks of the connecting slide 16 |
| 20 | pulling tractor |
| 21 | stationary front housing, mounted on the chassis 2 |
| 22 | undershot conveyor rotor for conveying crop material through the feeding channel 5, engages from above into the feeding channel 5 |
| 23.1, 23.2, 24.1, 24.2 | further bale forming rollers not belonging to the two sets 10, 11 |
| 25 | overhead conveyor rotor for conveying crop material through the feeding channel 5, engages from below into the feeding channel 5 |
| B | bale formed in the bale forming chamber 12 |
| TD | travelling direction of the baler 1 |

## Claims

1. Bale forming apparatus (1) with a bale forming device (9) comprising
- a plurality of rotatably mounted bale forming rollers (10.1, ..., 10.6, 11.1, ..., 11.6, 23.1, ..., 24.2, 8.1, 8.2) and
- a first roller holding device (17),
wherein the bale forming device (9) is arranged to form a round-cylindrical bale (B) in a bale forming chamber (12) which
- is at least temporarily delimited by the forming rollers (10.1, ..., 10.6, 11.1, ..., 11.6, 23.1, ..., 24.2, 8.1, 8.2) of the plurality and
- is changeable between a first chamber size and at least one further chamber size being larger than the first size,
wherein
- at least one moveable bale forming roller (10.1, ..., 10.5) and at least one further bale forming roller (10.6) belong to a first set (10) and
- at least one other bale forming roller (11.1, ..., 11.6) belongs to a second set (11),
wherein the bale forming chamber (12) is positioned between the two sets (10, 11), wherein the or every moveable bale forming roller (10.1, ..., 10.5, 11.1, ..., 11.5) is moveable in a direction perpendicular to its rotating axis into at least two different roller positions, and
wherein the bale forming rollers (10.1, ..., 10.6) of the first set (10) are mounted in a sequence at the first roller holding device (17),
**characterized in that**
the bale forming device (9) further comprises a connecting slide (16),
wherein the connecting slide (16) is moveable along the sequence of the bale forming rollers (10.1, ..., 10.6) of the first set (10)
- into a first sliding position and
- into at least one further sliding position
with respect to the first set (10),
wherein the bale forming chamber (12)
- has the first chamber size when the connecting slide (16) is in the first sliding position and
- has the or one larger further chamber size when the connecting slide (16) is in the or one further sliding position,
wherein the connecting slide (16) connects in every sliding position
- one bale forming roller (10.1, ..., 10.6) of the first set (10) with
- one bale forming roller (11.1, ..., 11.6) of the second set (11),
wherein in every sliding position the two connected bale forming rollers (10.1, 11.1, ..., 11.5) contribute to delimiting the bale forming chamber (12),
wherein the connecting slide (16) being in the first sliding position connects
- the or one moveable bale forming roller (10.1) of the first set (10) with
- one bale forming roller (11.1) of the second set (11),
wherein the connecting slide (16) being in the or every further sliding position connects
- the or one further bale forming roller (10.2, ..., 10.6) of the first set (10) with
- one bale forming roller (11.2, ..., 11.6) of the second set (11),
wherein the further bale forming roller (10.2, ..., 10.6) of the first set (10) which is connected by the connecting slide (16) being in the further sliding position is spaced apart from the bale forming chamber (12),
thereby does not contribute to delimiting the bale forming chamber (12),
when the connecting slide (16) is in the first sliding position.

2. Bale forming apparatus according to claim 1,
**characterized in that**
one moveable bale forming roller (10.1) of the first set (10) forms the end roller of the sequence,
wherein the connecting slide (16) being in the first sliding position connects
- the moveable bale forming roller (10.1) of the first set (10) forming the end roller with
- a bale forming roller (11.1) of the second set (11) and
wherein the moveable end roller (10.1) of the first set (10) contributes in every sliding position to delimiting the bale forming chamber (12).

3. Bale forming apparatus according to one of the preceding claims,
**characterized in that**
the connecting slide (16) enables in every sliding position a movement of every bale forming roller (10.1, ..., 11.1,...) which belongs to one set (10, 11) and is not connected in this sliding position
in a direction perpendicular to the rotating axis of this bale forming roller.

4. Bale forming apparatus according to one of the preceding claims,
**characterized in that**
the bale forming device (9) comprises a casing (21, 13) and
the first roller holding device (17) comprises a guiding device,
wherein the casing (21, 13) surrounds the bale forming chamber (12) while a bale (B) is formed in the bale forming chamber (12), and
wherein the guiding device
- is mounted at the casing (21, 13) and
- is arranged to guide the or at least one moveable bale forming roller (10.1, ..., 10.5) of the first set (10)
during its movement from one roller position into a further roller position.

5. Bale forming apparatus according to claim 4,
**characterized in that**
the casing (21, 13) comprises
- a discharge gate (13) and
- a further casing part (21) and
the bale forming device (9) comprises a second roller holding device (18),
wherein the discharge gate (13) is pivotal with respect to the further casing part (21), wherein the or every bale forming roller (11.1, ..., 11.6) of the second set (11) is mounted at the second roller holding device (18),
wherein one roller holding device (17) is mounted at the further casing part (21), and wherein the other roller holding device (18) is mounted at the discharge gate (13).

6. Bale forming apparatus according to one of the preceding claims,
**characterized in that**
the bale forming device (9) comprises a roller biasing device
wherein the roller biasing device tends to bias a moveable bale forming roller (10.1, ..., 10.5) of the first set (10) towards the second set (11).

7. Bale forming apparatus according to one of the preceding claims,
**characterized in that**
the connecting slide (16) is moveable from the first sliding position in a sliding direction into the or the adjacent further sliding position and
the or every moveable bale forming roller (10.1, ..., 10.5, 11.1, ..., 11.5) is moveable in a roller moving direction
- from a one roller position
- into a further roller position,
wherein the roller moving direction is perpendicular to the sliding direction.

8. Bale forming apparatus according to one of the preceding claims,
**characterized in that**
the bale forming device (9) comprises a second roller holding device (18) and
the second set (11) comprises several bale forming rollers (11.1, ..., 11.6),
wherein the bale forming rollers (11.1, ..., 11.6) of the second set (11) are mounted in a further sequence at the second roller holding device (18) and
wherein the bale forming chamber (12) is positioned between the two sets (10, 11) of bale forming rollers mounted in two sequences at the two roller holding devices (17, 18).

9. Bale forming apparatus according to claim 8,
**characterized in that**
the connecting slide (16) is simultaneously moveable
- along the sequence of the bale forming rollers of the first set (10) and
- along the further sequence of the bale forming rollers of the second set (11), and
wherein
- the two roller holding devices (17, 18),
- the rollers of the two sets (10, 11) and
- the moveable connecting slide (16)
are operable like a zipper.

10. Bale forming apparatus according to claim 9,
**characterized in that**
the bale forming roller (10.1,...., 10.6) of the first set (10) are positioned parallel to the bale forming rollers (11.1, ..., 11.6) of the second set (11)
if the connecting slide (16) is in the first sliding position.

11. Bale forming apparatus according to one of the preceding claims,
**characterized in that**
the sequence of the bale forming rollers (10.1, ..., 10.6) of the first set (10) comprises
- the moveable bale forming roller (10.1) of the first set (10) forming one end roller of the sequence,
- a further end roller (10.6) of the first set (10), and
- at least one intermediate roller (10.2, ..., 10.5) which is positioned on the first roller holding device (17) between the two end rollers (10.1, 10.6),
wherein the moveable end roller (10.1) and every intermediate roller (10.2, ..., 10.5) of the first set (10) are moveable in a direction perpendicular to its rotating axis into at least two roller positions,
wherein the connecting slide (16) is moveable
- into a first end sliding position serving as the first sliding position,
- into a further end sliding position, and
- into at least one intermediate sliding position,
wherein the connecting slide (16) being in an end sliding position connects
- an end roller (10.1, 10.6) of the first set (10) with
- a bale forming roller (11.1, 11.6) of the second set (11),
wherein the connecting slide (16) being in an intermediate sliding position connects
- an intermediate roller (10.2, ..., 10.5) of the first set (10) with
- a bale forming roller (11.2, ..., 11.5) of the second set (11), and
wherein the size of the bale forming chamber (12) increases stepwise when the connecting slide (16) is moved
- from the first sliding position
- via the or every intermediate sliding position into
- the other end sliding position.

12. Bale forming apparatus according to one of the preceding claims,
**characterized in that**
the bale forming apparatus (1) comprises a feeding device (6),
wherein the feeding device (6) is arranged to inject loose material through an inlet (7) into the bale forming chamber (12),
thus causing the injected loose material to apply pressure onto the delimiting bale forming rollers of the two sets (10, 11),
wherein the connecting slide (16) is arranged to move
- from the first sliding position in which the moveable bale forming roller (10.1) of the first set (10) is connected
- into a further sliding position in which the or one further bale forming roller (10.2, ..., 10.6) of the first set (10) is connected
in a direction away from the inlet (7),
thereby increasing the size of the bale forming chamber (12).

13. Bale forming apparatus according to claim 12,
**characterized in that**
the connecting slide (16) is arranged to move from the first sliding position into the further sliding position
if the applied pressure is above a given threshold.

14. Bale forming apparatus according to claim 12 or claim 13,
**characterized in that**
the bale forming device (9) comprises a retaining device,
wherein the retaining device tends to move the connecting slide (16) along the sequence of the first set (10)towards the inlet (7), and
wherein the connecting slide (16) is arranged to move from the first sliding position into the or one further sliding position away from the inlet (7)
against the retaining force applied by the retaining device.

15. Bale forming apparatus according to claim 14,
**characterized in that**
the bale forming device (9) comprises a position sensor,
wherein the position sensor is arranged to measure the current sliding position of the connecting slide (16) with respect to the first set (10),
wherein the retaining device is arranged to apply a retaining force onto the connecting slide (16)
wherein the applied retaining force tends to move the connecting slide (16) along the sequence towards the inlet (7), and
wherein the retaining device is arranged to apply the retaining force depending on the measured sliding position.

16. Bale forming apparatus according to one of the preceding claims,
**characterized in that**
the bale forming device (9) comprises
- a slide actuator and
- a pressure sensor,
wherein the pressure sensor is adapted to measure a value indicative of the pressure which the loose material in the bale forming chamber (12) applies onto at least one bale forming roller which contributes to delimiting the bale forming chamber (12), and wherein the slide actuator is arranged to move the connecting slide (16) from the first sliding position into the or at least one further sliding position
depending on signals from the pressure sensor.

17. Bale forming apparatus according to one of the preceding claims,
**characterized in that**
the bale forming device (9) is arranged
- to provide in every sliding position of the connecting slide (16) a substantially drum-shaped bale forming chamber (12) and
- to form a round-cylindrical bale (B) in the provided drum-shaped bale forming chamber (12).

18. Bale forming apparatus according to one of the preceding claims,
**characterized in that**
the first roller holding device comprises at least one flexible roller connector (17),
wherein the or every flexible roller connector (17) connects at least two adjacent bale forming rollers (10.1, 10.2, ...) of the first set (10) with each other and
wherein the flexible roller connector (17) or the ensemble of flexible roller connectors allows the or every moveable bale forming rollers (10.1, ..., 10.5) of the first set (10) to adapt its relative position to every adjacent roller of the first set (10) in every sliding position of the connecting slide (16).

19. Bale forming apparatus according to claim 18,
**characterized in that**
the connecting slide (16) is in every sliding position connected with the or with one flexible roller connector (17) and
is arranged for sliding
- over the flexible roller connector (17) or
- over one connector after the other connector
when moving along the sequence of the first set (10).

20. Bale forming apparatus according to claim 18 or claim 19,
**characterized in that**
the or at least one flexible roller connector (17)
- keeps the distance between two adjacent connected bale forming rollers (10.1, 10.2, ...) of the first set (10) below a maximal distance and
- allows one bale forming roller connected by the flexible roller connector (17) to rotate around the other bale forming roller also connected by this flexible roller connector (17).

21. Bale forming apparatus according to one of the claims 18 to 20,
**characterized in that**
the second set (12) comprises several bale forming rollers (11.1, ..., 11.6) and
the bale forming device (9) comprises a second roller holding device (18),
wherein at least two bale forming rollers (11.1, ..., 11.6) of the second set (11) are mounted in a further sequence at the second roller holding device (18),
wherein the second roller holding device (18) comprises at least one further flexible roller connector,
wherein the or every further roller connector connects at least two adjacent bale forming rollers (11.1, 11.2, ...) of the second set (11) with each other,
wherein the connecting slide (16) is in every sliding position connected with the or with one further flexible roller connector and
is arranged for simultaneously sliding
- over the flexible roller connector or connectors of the first roller holding device (17) and
- over the further flexible roller connector or connectors of the second roller holding device (18).

22. Bale forming apparatus according to one of the preceding claims,
**characterized in that**
the bale forming apparatus (1) is arranged
- to form a first bale in the bale forming chamber (12) and
- to subsequently form a second bale in the bale forming chamber (12),
wherein the connecting slide (16) connects one bale forming roller of the first set (10) with one bale forming roller of the second set (11) when the formation of the first bale is finished and
wherein the connecting slide (16) connects a different bale forming roller of the first set (10) with a bale forming roller of the second set (11) when the formation of the second bale is finished,
thereby
- forming the first bale with a first dimension and
- forming the second bale with a second, different dimension.

23. Bale forming apparatus according to one of the preceding claims,
**characterized in that**
in every sliding position of the connecting slide (16) the bale forming chamber (12) being delimited by at least some of the bale forming rollers (10, 11) is drum-shaped,
wherein
- the diameter of the bale forming chamber (12) with the connecting slide (16) being in the or at least one further sliding position is at least 1.5 times of
- the diameter of the bale forming chamber (12) with the connecting slide (16) being in the first sliding position.

24. Bale forming method for forming at least one round-cylindrical bale (B) from loose material in a bale forming chamber (12),
wherein a bale forming apparatus (1) comprising a bale forming device (9) is used,
wherein the bale forming device (9) comprises
- a plurality of rotatably mounted bale forming rollers (10.1, ..., 10.6, 11.1, ..., 11.6, 23.1, ..., 24.2, 8.1, 8.2) and
- a first roller holding device (17),
wherein the bale forming chamber (12) is at least temporarily surrounded by all bale forming rollers (10.1, ..., 10.6, 11.1, ..., 11.6, 23.1, ..., 24.2, 8.1, 8.2) of the plurality, wherein
- at least one moveable bale forming roller (10.1, ..., 10.5) and at least one further bale forming roller (10.6) belong to a first set (10) and
- at least one other bale forming roller belongs to a second set (11),
wherein the bale forming chamber (12) is positioned between the two sets (10, 11),
wherein the bale forming rollers (10.1, ..., 10.6) of the first set (10) are mounted in a sequence at the first roller holding device (17),
wherein the or every moveable bale forming roller (10.1, ..., 10.5) of the first set (10) is moveable perpendicular to its rotating axis, and
wherein the method comprises the step that
the bale forming device (9) forms
- during a small-size bale forming phase and
- during at least one large-size bale forming phase
the bale (B) or several bales in the bale forming chamber (12),
wherein the size of the bale forming chamber (12) in the small-size bale forming phase is smaller than that in the or every large-size bale forming phase,
wherein between two bale forming phases the or at least one moveable bale forming roller (10.1) is moved perpendicular to its rotating axis, and
wherein this roller movement increases or decreases the chamber size of the bale forming chamber (12),
**characterized in that**
the bale forming device (9) further comprises a connecting slide (16),
wherein the connecting slide (16) is moveable along the sequence of bale forming rollers (10.1, ..., 10.6) of the first set (10) into at least two different sliding positions,
wherein the connecting slide (16) connects in every sliding position
- one bale forming roller (10.1, ..., 10.6) of the first set (10) with
- one bale forming roller (11.1, ..., 11.6) of the second set (11),
wherein the two connected bale forming rollers (10.1, 11.1, ..., 10.6, 11.6) contribute to delimiting the bale forming chamber (12),
wherein in the small-size bale forming phase
- the connecting slide (16) being in a first sliding position connects the or one moveable bale forming roller (10.1) of the first set (10) with a bale forming roller (11.1) of the second set (11) and
- the connecting slide (16) is positioned between the or at least one further bale forming roller (10.2, ..., 10.6) of the first set (10) and the bale forming chamber (12) such that this further bale forming roller (10.2, ..., 10.6) is spaced apart from the bale forming chamber (12),
wherein between the two bale forming phases the connecting slide (16) is moved with respect to the roller sequence of the first set (10)
- from the first sliding position
- into a further sliding position,
thereby causing the movement of the or at least one moveable roller (10.1), and
wherein in the or every large-size bale forming phase
- the connecting slide (16) being in the or one further sliding position connects the or one further bale forming roller (10.2, ..., 10.6) of the first set (10) with a bale forming roller (11.2, ..., 11.6) of the second set (11) and
- the moveable bale forming roller (10.1) of the first set (10) being connected in the small-size bale forming phase and the further connected bale forming roller (10.1, ..., 10.6) of the first set (10) being connected in the large-size bale forming phase both contribute to delimiting the bale forming chamber (12)
such that the size of the bale forming chamber (12) in the or every large-size bale forming phase is larger than its size in the small-size bale forming phase.

25. Bale forming method according to claim 24,
**characterized in that**
one moveable bale forming roller (10.1) of the first set (10) forms the end roller of the sequence,
wherein in the small-size bale forming phase the connecting slide (16) connects
- the moveable bale forming roller (10.1) of the first set (10) forming the end roller with
- a bale forming roller (11.1) of the second set (11) and
wherein in every bale forming phase the moveable bale forming roller (10.1) of the first set (10) forming the end roller contributes to delimiting the bale forming chamber (12).

26. Bale forming method according to claim 24 or claim 25,
**characterized in that**
the bale forming apparatus (1) performs
- the small-size bale forming phase and afterwards
- the or every large-size bale forming phase,
wherein the bale forming apparatus (1) forms one bale (B) as the result of performing the sequence of bale forming phases.

27. Bale forming method according to one of the claims 24 to 26,
**characterized in that**
a pressure sensor measures a value indicative of the pressure which the loose material in the bale forming chamber (12) applies onto at least one bale forming roller which contributes to delimiting the bale forming chamber (12),
wherein the step that the connecting slide (16) is moved from the first sliding position into the further sliding position
is triggered by the event that the measured pressure reaches a given threshold.

28. Bale forming method according to one of the claims 24 to 27,
**characterized in that**
the bale forming apparatus (1) forms at least two round-cylindrical bales in the at least two consecutive bale forming phases,
namely one bale per bale forming phase,
wherein the step that the moveable bale forming roller (10.1) of the first set (10) is moved is performed
- after a first bale is formed and
- before a second bale is formed.

## Patentansprüche

1. Ballenformvorrichtung (1) mit einer Ballenformeinheit (9), mit:
- einer Mehrzahl von drehbar montierten Ballenformrollen (10.1, ..., 10.6, 11.1, ..., 11.6, 23.1, ..., 24.2, 8.1, 8.2) und
- einer ersten Rollenhalteeinheit (17),
wobei die Ballenformeinheit (9) dazu angeordnet ist, einen rundzylindrischen Ballen (B) in einer Ballenformkammer (12) zu formen, die
- mindestens zeitweise durch die Formrollen (10.1, ..., 10.6, 11.1, ..., 11.6, 23.1, ..., 24.2, 8.1, 8.2) der Mehrzahl abgegrenzt ist und
- veränderbar ist zwischen einer ersten Kammergröße und mindestens einer weiteren Kammergröße, die größer als die erste Größe ist,
wobei
- mindestens eine bewegliche Ballenformrolle (10.1, ..., 10.5) und mindestens eine weitere Ballenformrolle (10.6) zu einem ersten Satz (10) gehören und
- mindestens eine weitere Ballenformrolle (11.1, ..., 11.6) zu einem zweiten Satz (11) gehört,
wobei die Ballenformkammer (12) zwischen den beiden Sätzen (10, 11) positioniert ist,
wobei die oder jede bewegliche Ballenformrolle (10.1, ..., 10.5, 11.1, ..., 11.5) in einer Richtung senkrecht zu ihrer Rotationsachse in mindestens zwei verschiedene Rollenpositionen beweglich ist, und
wobei die Ballenformrollen (10.1, ..., 10.6) des ersten Satzes (10) in einer Reihenanordnung an der ersten Rollenhalteeinheit (17) montiert sind,
**dadurch gekennzeichnet, dass**
die Ballenformeinrichtung (9) weiterhin ein Verbindungsgleitstück (16) aufweist,
wobei das Verbindungsgleitstück (16) entlang der Reihenanordnung der Ballenformrollen (10.1, ..., 10.6) des ersten Satzes (10)
- in eine erste Gleitposition und
- in mindestens eine weitere Gleitposition
relativ zu dem ersten Satz (10) beweglich ist,
wobei die Ballenformkammer (12)
- die erste Kammergröße besitzt, wenn sich das Verbindungsgleitstück (16) in der ersten Gleitposition befindet, und
- die oder eine größere weitere Kammergröße besitzt, wenn sich das Verbindungsgleitstück (16) in der oder einer weiteren Gleitposition befindet,
wobei das Verbindungsgleitstück (16) in jeder Gleitposition
- eine Ballenformrolle (10.1, ..., 10.6) des ersten Satzes (10) mit
- einer Ballenformrolle (11.1, ..., 11.6) des zweiten Satzes (11)
verbindet,
wobei die beiden verbundenen Ballenformrollen (10.1, 11.1, ..., 11.5) in jeder Gleitposition zum Abgrenzen der Ballenformkammer (12) beitragen,
wobei das Verbindungsgleitstück (16), wenn es sich in der ersten Gleitposition befindet,
- die oder eine bewegliche Ballenformrolle (10.1) des ersten Satzes (10) mit
- einer Ballenformrolle (11.1) des zweiten Satzes (11)
verbindet,
wobei das Verbindungsgleitstück (16), wenn es sich in der oder jeder weiteren Gleitposition befindet,
- die oder eine weitere Ballenformrolle (10.2, ..., 10.6) des ersten Satzes (10) mit
- einer Ballenformrolle (11.2, ..., 11.6) des zweiten Satzes (11)
verbindet,
wobei die weitere Ballenformrolle (10.2, ..., 10.6) des ersten Satzes (10), die über das sich in der weiteren Gleitposition befindende Verbindungsgleitstück (16) verbunden ist, von der Ballenformkammer (12) beabstandet ist, und
dadurch nicht zum Abgrenzen der Ballenformkammer (12) beiträgt,
wenn sich das Verbindungsgleitstück (16) in der ersten Gleitposition befindet.

2. Ballenformvorrichtung nach Anspruch 1,
**dadurch gekennzeichnet, dass**
eine bewegliche Ballenformrolle (10.1) des ersten Satzes (10) die Endrolle der Reihenanordnung bildet,
wobei das Verbindungsgleitstück (16), wenn es sich in der ersten Gleitposition befindet,
- die bewegliche Ballenformrolle (10.1) des ersten Satzes (10), die die Endrolle bildet, mit
- einer Ballenformrolle (11.1) des zweiten Satzes (11)
verbindet und
wobei die bewegliche Endrolle (10.1) des ersten Satzes (10) in jeder Gleitposition zum Begrenzen der Ballenformkammer (12) beiträgt.

3. Ballenformvorrichtung nach einem der vorhergehenden Ansprüche,
**dadurch gekennzeichnet, dass**
das Verbindungsgleitstück (16) in jeder Gleitposition eine Bewegung jeder Ballenformrolle (10.1, ..., 11.1,...), die zu einem Satz (10, 11) gehört und in dieser Gleitposition nicht verbunden ist, in einer Richtung senkrecht zu der Rotationsachse dieser Ballenformrolle ermöglicht.

4. Ballenformvorrichtung nach einem der vorhergehenden Ansprüche,
**dadurch gekennzeichnet, dass**
die Ballenformeinheit (9) ein Gehäuse (21, 13) aufweist und
die erste Rollenhalteeinheit (17) eine Führungseinheit aufweist,
wobei das Gehäuse (21, 13) eine Ballenformkammer (12) umgibt, während ein Ballen (B) in der Ballenformkammer (12) geformt wird, und
wobei die Führungseinheit
- an dem Gehäuse (21, 13) montiert ist und
- dazu angeordnet ist, die oder mindestens eine bewegliche Ballenformrolle (10.1, ..., 10.5) des ersten Satzes (10)
während ihrer Bewegung von einer Rollenposition in eine weitere Rollenposition zu führen.

5. Ballenformvorrichtung nach Anspruch 4,
**dadurch gekennzeichnet, dass**
das Gehäuse (21, 13) Folgendes aufweist:
- ein Auswurftor (13) und
- ein weiteres Gehäuseteil (21) und
die Ballenformeinheit (9) eine zweite Rollenhalteeinheit (18) aufweist,
wobei das Auswurftor (13) relativ zu dem weiteren Gehäuseteil (21) schwenkbar ist,
wobei die oder jede Ballenformrolle (11.1, ..., 11.6) des zweiten Satzes (11) an der zweiten Rollenhalteeinheit (18) montiert ist,
wobei eine Rollenhalteeinheit (17) an dem weiteren Gehäuseteil (21) montiert ist und
wobei die andere Rollenhalteeinheit (18) an dem Auswurftor (13) montiert ist.

6. Ballenformvorrichtung nach einem der vorhergehenden Ansprüche,
**dadurch gekennzeichnet, dass**
die Ballenformeinheit (9) eine Rollenbeaufschlagungseinheit aufweist,
wobei die Rollenbeaufschlagungseinheit danach strebt, eine bewegliche Ballenformrolle (10.1, ..., 10.5) des ersten Satzes (10) in Richtung auf den zweiten Satz (11) zu beaufschlagen.

7. Ballenformvorrichtung nach einem der vorhergehenden Ansprüche,
**dadurch gekennzeichnet, dass**
das Verbindungsgleitstück (16) von der ersten Gleitposition in einer Schieberichtung in die oder die benachbarte weitere Gleitposition beweglich ist und
die oder jede bewegliche Ballenformrolle (10.1, ..., 10.5, 11.1, ..., 11.5) in einer Rollenbewegungsrichtung beweglich ist
- von einer einen Rollenposition
- in eine weitere Rollenposition,
wobei die Rollenbewegungsrichtung senkrecht zu der Gleichrichtung verläuft.

8. Ballenformvorrichtung nach einem der vorhergehenden Ansprüche,
**dadurch gekennzeichnet, dass**
die Ballenformeinheit (9) eine zweite Rollenhalteeinheit (18) aufweist und
der zweite Satz (11) mehrere Ballenformrollen (11.1, ..., 11.6) aufweist,
wobei die Ballenformrollen (11.1, ..., 11.6) des zweiten Satzes (11) in einer weiteren Reihenanordnung an der zweiten Rollenhalteeinheit (18) montiert sind,
wobei die Ballenformkammer (12) zwischen den beiden Sätzen (10, 11) von in zwei Reihenanordnungen an den beiden Rollenhalteeinheiten (17, 18) montierten Ballenformrollen positioniert ist.

9. Ballenformvorrichtung nach Anspruch 8,
**dadurch gekennzeichnet, dass**
das Verbindungsgleitstück (16) gleichzeitig verschieblich ist
- entlang der Reihenanordnung der Ballenformrollen des ersten Satzes (10) und
- entlang der weiteren Reihenanordnung der Ballenformrollen des zweiten Satzes (11) und wobei
- die beiden Rollenhalteeinheiten (17, 18),
- die Rollen der zwei Sätze (10, 11) und
- das bewegliche Verbindungsgleitstück (16)
wie ein Reißverschluss betreibbar sind.

10. Ballenformeinrichtung nach Anspruch 9,
**dadurch gekennzeichnet, dass**
die Ballenformrollen (10.1, ...,. 10.6) des ersten Satzes (10) parallel zu den Ballenformrollen (11.1, ..., 11.6) des zweiten Satzes (11) positioniert sind,
wenn sich das Verbindungsgleitstück (16) in der ersten Gleitposition befindet.

11. Ballenformeinrichtung nach einem der vorhergehenden Ansprüche,
**dadurch gekennzeichnet, dass**
die Reihenanordnung der Ballenformrollen (10.1, ..., 10.6) des ersten Satzes (10) Folgendes aufweist:
- die bewegliche Ballenformrolle (10.1) des ersten Satzes (10), die eine Endrolle der Reihenanordnung bildet,
- eine weitere Endrolle (10.6) des ersten Satzes (10) und
- mindestens eine Zwischenrolle (10.2, ..., 10.5), die auf der ersten Rollenhalteeinheit (17) zwischen den beiden Endrollen (10.1, 10.6) positioniert ist,
wobei die bewegliche Endrolle (10.1) und jede Zwischenrolle (10.2, ..., 10.5) des ersten Satzes (10) in einer Richtung senkrecht zu ihrer Rotationsachse in mindestens zwei Rollenpositionen beweglich ist,
wobei das Verbindungsgleitstück (16) beweglich ist
- in eine erste Endgleitposition, die als die erste Gleitposition dient,
- in eine weitere Endgleitposition und
- in mindestens eine Zwischengleitposition,
wobei das Verbindungsgleitstück (16), wenn es sich in einer Endgleitposition befindet,
- eine Endrolle (10.1, 10.6) des ersten Satzes (10) mit
- einer Ballenformrolle (11.1, 11.6) des zweiten Satzes (11)
verbindet,
wobei das Verbindungsgleitstück (16), wenn es sich in einer Zwischengleitposition befindet,
- eine Zwischenrolle (10.2, ..., 10.5) des ersten Satzes (10) mit
- einer Ballenformrolle (11.2, ..., 11.5) des zweiten Satzes (11)
verbindet,
wobei Größe der Ballenformkammer (12) sich schrittweise erhöht, wenn das Verbindungsgleitstück (16)
- von der ersten Gleitposition
- über die oder jede Zwischengleitposition in
- die andere Endgleitposition
bewegt wird.

12. Ballenformvorrichtung nach einem der vorhergehenden Ansprüche,
**dadurch gekennzeichnet, dass**
die Ballenformvorrichtung (1) eine Zuführeinheit (6) aufweist,
wobei die Zuführeinheit (6) dazu angeordnet ist, loses Material durch einen Einlass (7) in die Ballenformkammer (12) einzubringen
und auf diese Weise zu bewirken, dass das eingebrachte lose Material Druck auf die abgrenzenden Ballenformrollen der beiden Sätze (10, 11) ausübt,
wobei das Verbindungsgleitstück (16) dazu angeordnet ist, sich
- von der ersten Gleitposition, in der die bewegliche Ballenformrolle (10.1) des ersten Satzes (10) verbunden ist,
- in eine weitere Gleitposition, in der die oder eine weitere Ballenformrolle (10.2, ..., 10.6) des ersten Satzes (10) verbunden ist,
in einer Richtung weg von dem Einlass (7) zu bewegen
und dabei die Größe der Ballenformkammer (12) zu vergrößern.

13. Ballenformvorrichtung nach Anspruch 12,
**dadurch gekennzeichnet, dass**
das Verbindungsgleitstück (16) dazu angeordnet ist, sich von der ersten Gleitposition in die weitere Gleitposition zu bewegen,
wenn der ausgeübte Druck oberhalb einer vorgegebenen Schwelle liegt.

14. Ballenformvorrichtung nach Anspruch 12 oder Anspruch 13,
**dadurch gekennzeichnet, dass**
die Ballenformeinheit (9) eine Rückhalteeinheit aufweist,
wobei die Rückhalteeinheit danach strebt, das Verbindungsgleitstück (16) entlang der Reihenanordnung des ersten Satzes (10) in Richtung auf den Einlass (7) zu bewegen, und
wobei das Verbindungsgleitstück (16) dazu angeordnet ist, sich von der ersten Gleitposition in die oder eine weitere Gleitposition weg von dem Einlass (7) zu bewegen,
entgegen der Rückhaltekraft, die durch die Rückhalteeinheit ausgeübt wird.

15. Ballenformvorrichtung nach Anspruch 14,
**dadurch gekennzeichnet, dass**
die Ballenformeinheit (9) einen Positionssensor aufweist,
wobei der Positionssensor dazu angeordnet ist, die gegenwärtige Gleitposition des Verbindungsgleitstücks (16) relativ zu dem ersten Satz (10) zu messen,
wobei die Rückhalteeinheit dazu angeordnet ist, eine Rückhaltekraft auf das Verbindungsgleitstück (16) auszuüben,
wobei die ausgeübte Rückhaltekraft danach strebt, das Verbindungsgleitstück (16) entlang der Reihenanordnung in Richtung auf den Einlass (7) zu bewegen, und
wobei die Rückhalteeinheit dazu angeordnet ist, die Rückhaltekraft abhängig von der gemessenen Gleitposition auszuüben.

16. Ballenformvorrichtung nach einem der vorhergehenden Ansprüche,
**dadurch gekennzeichnet, dass**
die Ballenformeinheit (9) Folgendes aufweist:
- einen Gleitaktuator und
- einen Drucksensor,
wobei der Drucksensor dazu angepasst ist, einen Wert zu messen, der den Druck anzeigt, den das lose Material in der Ballenformkammer (12) auf mindestens eine Ballenformrolle ausübt, die zum Begrenzen der Ballenformkammer (12) beiträgt, und
wobei der Gleitaktuator dazu angeordnet ist, das Verbindungsgleitstück (16) von der ersten Gleitposition in die oder mindestens eine weitere Gleitposition zu bewegen,
abhängig von Signalen von dem Drucksensor.

17. Ballenformvorrichtung nach einem der vorhergehenden Ansprüche,
**dadurch gekennzeichnet, dass**
die Ballenformeinheit (9) dazu angeordnet ist,
- in jeder Gleitposition des Verbindungsgleitstücks (16) eine im Wesentlichen trommelförmige Ballenformkammer (12) bereitzustellen und
- in der bereitgestellten trommelförmigen Ballenformkammer (12) einen rundzylindrischen Ballen (B) zu formen.

18. Ballenformvorrichtung nach einem der vorhergehenden Ansprüche,
**dadurch gekennzeichnet, dass**
die erste Rollenhalteeinheit mindestens einen flexiblen Rollenverbinder (17) aufweist,
wobei der oder jeder flexible Rollenverbinder (17) mindestens zwei benachbarte Ballenformrollen (10.1, 10.2, ...) des ersten Satzes (10) miteinander verbindet und
wobei der flexible Rollenverbinder (17) oder das Ensemble von flexiblen Rollenverbindern es der oder jeder beweglichen Ballenformrolle (10.1, ..., 10.5) des ersten Satzes (10) erlaubt, ihre relative Position zu jeder benachbarten Rolle des ersten Satzes (10) in jeder Gleitposition des ersten Verbindungsgleitstücks (16) anzupassen.

19. Ballenformvorrichtung nach Anspruch 18,
**dadurch gekennzeichnet, dass**
das Verbindungsgleitstück (16) in jeder Gleitposition mit dem oder mit einem flexiblen Rollenverbinder (17) verbunden ist und
zum Gleiten
- über den flexiblen Rollenverbinder (17) oder
- über einen Verbinder nach dem anderen Verbinder
angeordnet ist,
wenn es sich entlang der Reihenanordnung des ersten Satzes (10) bewegt.

20. Ballenformvorrichtung nach Anspruch 18 oder Anspruch 19,
**dadurch gekennzeichnet, dass**
der oder mindestens ein flexibler Rollenverbinder (17)
- den Abstand zwischen zwei benachbarten verbundenen Ballenformrollen (10.1, 10.2, ...) des ersten Satzes (10) unterhalb eines maximalen Abstand hält und
- es einer Ballenformrolle, durch den flexiblen Rollenverbinder (17) verbunden ist, erlaubt, um die andere Ballenformrolle zu drehen, die auch durch diesen flexiblen Rollenverbinder (17) verbunden ist.

21. Ballenformvorrichtung nach einem der Ansprüche 18 bis 20,
**dadurch gekennzeichnet, dass**
das zweite Satz (12) mehrere Ballenformrollen (11.1, ..., 11.6) aufweist und
die Ballenformeinheit (9) eine zweite Rollenhalteeinheit (18) aufweist,
wobei mindestens zwei Ballenformrollen (11.1, ..., 11.6) des zweiten Satzes (11) in einer weiteren Reihenanordnung an der zweiten Rollenhalteeinheit (18) montiert sind,
wobei die zweite Rollenhalteeinheit (18) mindestens einen weiteren flexiblen Rollenverbinder aufweist,
wobei der oder jeder weitere Rollenverbinder mindestens zwei benachbarte Ballenformrollen (11.1, 11.2, ...) des zweiten Satzes (11) miteinander verbindet,
wobei das Verbindungsgleitstück (16) in jeder Gleitposition mit dem oder mit einem weiteren flexiblen Rollenverbinder verbunden ist und
dazu angeordnet ist, gleichzeitig
- über den flexiblen Rollenverbinder oder die flexiblen Rollenverbinder der ersten Rollenhalteeinheit (17) und
- über den flexiblen Rollenverbinder oder die flexiblen Rollenverbinder der zweiten Rollenhalteeinheit (18)
zu gleiten.

22. Ballenformvorrichtung nach einem der vorhergehenden Ansprüche,
**dadurch gekennzeichnet, dass**
die Ballenformvorrichtung (1) dazu angeordnet ist,
- in der Ballenformkammer (12) einen ersten Ballen zu formen und
- anschließend in der Ballenformkammer (12) einen zweiten Ballen zu formen,
wobei das Verbindungsgleitstück (16) eine Ballenformrolle des ersten Satzes (10) mit einer Ballenformrolle des zweiten Satzes (11) verbindet, wenn das Formen des ersten Ballens abgeschlossen ist, und
wobei das Verbindungsgleitstück (16) eine andere Ballenformrolle des ersten Satzes (10) mit einer Ballenformrolle des zweiten Satzes (11) verbindet, wenn das Formen des zweiten Ballens abgeschlossen ist,
wodurch
- der erste Ballen mit einer ersten Abmessung geformt wird und
- der zweite Ballen mit einer zweiten, anderen Abmessung geformt wird.

23. Ballenformvorrichtung nach einem der vorhergehenden Ansprüche,
**dadurch gekennzeichnet, dass**
in jeder Gleitposition des Verbindungsgleitstücks (16) die Ballenformkammer (12), die von mindestens einigen der Ballenformrollen (10, 11) begrenzt wird, trommelförmig ist,
wobei
- der Durchmesser der Ballenformkammer (12), wenn sich das Verbindungsgleitstück (16) in der oder mindestens einer weiteren Gleitposition befindet, mindestens 1,5-mal
- den Durchmesser der Ballenformkammer (12), wenn sich das Verbindungsgleitstück (16) in der ersten Gleitposition befindet, beträgt.

24. Ballenformverfahren zum Formen mindestens eines rundzylindrischen Ballens (B) aus losem Material in einer Ballenformkammer (12),
wobei eine Ballenformvorrichtung (1) mit einer Ballenformeinheit (9) verwendet wird,
wobei die Ballenformeinheit (9) Folgendes aufweist:
- eine Mehrzahl von drehbar montierten Ballenformrollen (10.1, ..., 10.6, 11.1, ..., 11.6, 23.1, ..., 24.2, 8.1, 8.2) und
- eine erste Rollenhalteeinheit (17),
wobei die Ballenformkammer (12) mindestens zeitweise von allen Ballenformrollen (10.1, ..., 10.6, 11.1, ..., 11.6, 23.1, ..., 24.2, 8.1, 8.2) der Mehrzahl umgeben ist,
wobei
- mindestens eine bewegliche Ballenformrolle (10.1, ..., 10.5) und mindestens eine weitere Ballenformrolle (10.6) zu einem ersten Satz (10) gehören und
- mindestens eine weitere Ballenformrolle zu einem zweiten Satz (11) gehört,
wobei die Ballenformkammer (12) zwischen den beiden Sätzen (10, 11) positioniert ist,
wobei die Ballenformrollen (10.1, ..., 10.6) des ersten Satzes (10) in einer Reihenanordnung an der ersten Rollenhalteeinheit (17) montiert sind,
wobei die oder jede bewegliche Ballenformrolle (10.1, ..., 10.5) des ersten Satzes (10) senkrecht zu ihrer Rotationsachse beweglich ist und
wobei das Verfahren den Schritt aufweist, dass
die Ballenformeinrichtung (9),
- während einer Kleinballenformphase und
- während mindestens einer Großballenformphase
den Ballen (B) oder mehrere Ballen in der Ballenformkammer (12) formt,
wobei die Größe der Ballenformkammer (12) in der Kleinballenformphase kleiner ist als die in der oder jeder Großballenformphase,
wobei zwischen zwei Ballenformphasen die oder mindestens eine Ballenformrolle (10.1) senkrecht zu ihrer Rotationsachse bewegt wird und
wobei diese Rollenbewegung die Kammergröße der Ballenformkammer (12) vergrößert oder verkleinert,
**dadurch gekennzeichnet, dass**
die Ballenformeinheit (9) weiterhin ein Verbindungsgleitstück (16) aufweist,
wobei das Verbindungsgleitstück (16) entlang der Reihenanordnung von Ballenformrollen (10.1, ..., 10.6) des ersten Satzes (10) in mindestens zwei verschiedene Gleitpositionen beweglich ist, wobei das Verbindungsgleitstück (16) in jeder Gleitposition
- eine Ballenformrolle (10.1, ..., 10.6) des ersten Satzes (10) mit
- einer Ballenformrolle (11.1, ..., 11.6) des zweiten Satzes (11)
verbindet,
wobei die beiden verbundenen Ballenformrollen (10.1, 11.1, ..., 10.6, 11.6) zum Abgrenzen der Ballenformkammer (12) beitragen,
wobei in der Kleinballenformphase
- das Verbindungsgleitstück (16), wenn er sich in einer ersten Gleitposition befindet, die oder eine bewegliche Ballenformrolle (10.1) des ersten Satzes (10) mit einer Ballenformrolle (11.1) des zweiten Satzes (11) verbindet und
- das Verbindungsgleitstück (16) zwischen der oder mindestens einer weiteren Ballenformrolle (10.2, ..., 10.6) des ersten Satzes (10) und der Ballenformkammer (12) positioniert ist, so dass diese weitere Ballenformrolle (10.2, ..., 10.6) von der Ballenformkammer (12) beabstandet ist,
wobei zwischen den beiden Ballenformphasen das Verbindungsgleitstück (16) relativ zu der Rollen-Reihenanordnung des ersten Satzes (10)
- von der ersten Gleitposition
- in eine weitere Gleitposition,
bewegt wird,
wodurch es die Bewegung der oder mindestens einer beweglichen Rolle (10.1) bewirkt und wobei in der oder jeder Großballenformphase
- das Verbindungsgleitstück (16), wenn es sich in der oder einer weiteren Gleitposition befindet, die oder eine weitere Ballenformrolle (10.2, ..., 10.6) des ersten Satzes (10) mit einer Ballenformrolle (11.2, ..., 11.6) des zweiten Satzes (11) verbindet und
- die bewegliche Ballenformrolle (10.1) des ersten Satzes (10), wenn sie in der Kleinballenformphase verbunden ist, und die weitere verbundene Ballenformrolle (10.1, ..., 10.6) des ersten Satzes (10), wenn sie in der Großballenformphase verbunden ist, beide zum Begrenzen der Ballenformkammer (12) beitragen,
so dass die Größe der Ballenformkammer (12) in der oder jeder Großballenformphase größer ist als ihre Größe in der Kleinballenformphase.

25. Ballenformverfahren nach Anspruch 24,
**dadurch gekennzeichnet, dass**
eine bewegliche Ballenformrolle (10.1) des ersten Satzes (10) die Endrolle der Reihenanordnung bildet,
wobei in der Kleinballenformphase das Verbindungsgleitstück (16)
- die die Endrolle bildende bewegliche Ballenformrolle (10.1) des ersten Satzes (10) mit
- einer Ballenformrolle (11.1) des zweiten Satzes (11)
verbindet und
wobei in jeder Ballenformphasen die die Endrolle bildende bewegliche Ballenformrolle (10.1) des ersten Satzes (10) zum Begrenzen der Ballenformkammer (12) beiträgt.

26. Ballenformverfahren nach Anspruch 24 oder Anspruch 25,
**dadurch gekennzeichnet, dass**
die Ballenformvorrichtung (1)
- die Kleinballenformphase und anschließend
- die oder jede Großballenformphase
ausführt,
wobei die Ballenformeinrichtung (1) einen Ballen (B) als das Ergebnis des Ausführens der Abfolge von Ballenformphasen formt.

27. Ballenformverfahren nach einem der Ansprüche 24 bis 26,
**dadurch gekennzeichnet, dass**
ein Drucksensor einen Wert misst, der den Druck anzeigt, den das lose Material in der Ballenformkammer (12) auf mindestens eine Ballenformrolle ausübt, die zum Abgrenzen der Ballenformkammer (12) beiträgt,
wobei der Schritt, dass das Verbindungsgleitstück (16) von der ersten Gleitposition in die weitere Gleitposition bewegt wird,
durch das Ereignis ausgelöst wird, dass der gemessene Druck eine vorgegebene Schwelle erreicht.

28. Ballenformverfahren nach einem der Ansprüche 24 bis 27,
**dadurch gekennzeichnet, dass**
die Ballenformvorrichtung (1) mindestens zwei rundzylindrische Ballen in den mindestens zwei aufeinanderfolgenden Ballenformphasen formt,
nämlich einen Ballen pro Ballenformphase,
wobei der Schritt, dass die bewegliche Ballenformrolle (10.1) des ersten Satzes (10) bewegt wird, ausgeführt wird,
- nachdem ein erster Ballen geformt wurde und
- bevor ein zweiter Ballen geformt wird.

## Revendications

1. Appareil de formation de balles (1) avec un dispositif de formation de balles (9) comprenant
- une pluralité de rouleaux de formation de balles montés rotatifs (10.1, ..., 10.6, 11.1, ..., 11.6, 23.1, ..., 24.2, 8.1, 8.2) et
- un premier dispositif de maintien de rouleau (17),
dans lequel le dispositif de formation de balles (9) est agencé pour former une balle cylindrique ronde (B) dans une chambre de formation de balles (12) qui
- est délimitée au moins temporairement par les rouleaux de formation (10.1, ..., 10.6, 11.1, ..., 11.6, 23.1, ..., 24.2, 8.1, 8.2) de la pluralité et
- est modifiable entre une première taille de chambre et au moins une taille de chambre supplémentaire qui est plus grande que la première taille,
dans lequel
- au moins un rouleau de formation de balles mobile (10.1, ..., 10.5) et au moins un rouleau de formation de balles supplémentaire (10.6) appartiennent à un premier ensemble (10) et
- au moins un autre rouleau de formation de balles (11.1, ..., 11.6) appartient à un second ensemble (11),
dans lequel la chambre de formation de balles (12) est positionnée entre les deux ensembles (10, 11),
dans lequel le ou chaque rouleau de formation de balles mobile (10.1, ..., 10.5, 11.1, ..., 11.5) est mobile dans une direction perpendiculaire à son axe de rotation dans au moins deux positions de rouleau différentes, et
dans lequel les rouleaux de formation de balles (10.1, ..., 10.6) du premier ensemble (10) sont montés dans une séquence au niveau du premier dispositif de maintien de rouleau (17),
**caractérisé en ce que**
le dispositif de formation de balles (9) comprend en outre un coulisseau de raccordement (16),
dans lequel le coulisseau de raccordement (16) est mobile le long de la séquence des rouleaux de formation de balles (10.1, ..., 10.6) du premier ensemble (10)
- dans une première position de coulissement et
- dans au moins une position de coulissement supplémentaire
par rapport au premier ensemble (10),
dans lequel la chambre de formation de balles (12)
- a la première taille de chambre lorsque le coulisseau de raccordement (16) est dans la première position de coulissement et
- a la ou une taille de chambre supplémentaire plus grande lorsque le coulisseau de raccordement (16) est dans la ou une position de coulissement supplémentaire,
dans lequel le coulisseau de raccordement (16) raccorde dans chaque position de coulissement
- un rouleau de formation de balles (10.1, ..., 10.6) du premier ensemble (10) à
- un rouleau de formation de balles (11.1, ..., 11.6) du second ensemble (11),
dans lequel, dans chaque position de coulissement les deux rouleaux de formation de balles raccordés (10.1, 11.1, ..., 11.5) contribuent à délimiter la chambre de formation de balles (12),
dans lequel le coulisseau de raccordement (16) dans la première position de coulissement raccorde
- le ou un rouleau de formation de balles mobile (10.1) du premier ensemble (10) à
- un rouleau de formation de balles (11.1) du second ensemble (11),
dans lequel le coulisseau de raccordement (16) dans la ou chaque position de coulissement supplémentaire raccorde
- le ou un rouleau de formation de balles supplémentaire (10.2, ..., 10.6) du premier ensemble (10) à
- un rouleau de formation de balles (11.2, ..., 11.6) du second ensemble (11),
dans lequel le rouleau de formation de balles supplémentaire (10.2, ..., 10.6) du premier ensemble (10) qui est raccordé par le coulisseau de raccordement (16) dans la position de coulissement supplémentaire est espacé de la chambre de formation de balles (12),
ne contribue ainsi pas à délimiter la chambre de formation de balles (12),
lorsque le coulisseau de raccordement (16) est dans la première position de coulissement.

2. Appareil de formation de balles selon la revendication 1,
**caractérisé en ce que**
un rouleau de formation de balles mobile (10.1) du premier ensemble (10) forme le rouleau d'extrémité de la séquence,
dans lequel le coulisseau de raccordement (16) dans la première position de coulissement raccorde
- le rouleau de formation de balles mobile (10.1) du premier ensemble (10) formant le rouleau d'extrémité à
- un rouleau de formation de balles (11.1) du second ensemble (11) et
dans lequel le rouleau d'extrémité mobile (10.1) du premier ensemble (10) contribue dans chaque position de coulissement à délimiter la chambre de formation de balles (12).

3. Appareil de formation de balles selon l'une des revendications précédentes,
**caractérisé en ce que**
le coulisseau de raccordement (16) permet dans chaque position de coulissement un déplacement de chaque rouleau de formation de balles (10.1, ..., 11.1, ...) qui appartient à un ensemble (10, 11) et n'est pas raccordé dans cette position de coulissement
dans une direction perpendiculaire à l'axe de rotation de ce rouleau de formation de balles.

4. Appareil de formation de balles selon l'une des revendications précédentes,
**caractérisé en ce que**
le dispositif de formation de balles (9) comprend un carter (21, 13) et
le premier dispositif de maintien de rouleau (17) comprend un dispositif de guidage,
dans lequel le carter (21, 13) entoure la chambre de formation de balles (12) tandis qu'une balle (B) est formée dans la chambre de formation de balles (12), et
dans lequel le dispositif de guidage
- est monté au niveau du carter (21, 13) et
- est agencé pour guider le ou au moins un rouleau de formation de balles (10.1, ..., 10.5) du premier ensemble (10)
pendant son déplacement d'une position de rouleau à une position de rouleau supplémentaire.

5. Appareil de formation de balles selon la revendication 4,
**caractérisé en ce que**
le carter (21, 13) comprend
- une grille d'évacuation (13) et
- une partie de carter supplémentaire (21) et
le dispositif de formation de balles (9) comprend un second dispositif de maintien de rouleau (18),
dans lequel la grille d'évacuation (13) est pivotante par rapport à la partie de carter supplémentaire (21),
dans lequel le ou chaque rouleau de formation de balles (11.1, ..., 11.6) du second ensemble (11) est monté au niveau du second dispositif de maintien de rouleau (18),
dans lequel un dispositif de maintien de rouleau (17) est monté au niveau de la partie de carter supplémentaire (21), et
dans lequel l'autre dispositif de maintien de rouleau (18) est monté au niveau de la grille d'évacuation (13).

6. Appareil de formation de balles selon l'une des revendications précédentes,
**caractérisé en ce que**
le dispositif de formation de balles (9) comprend un dispositif de sollicitation de rouleau
dans lequel le dispositif de sollicitation de rouleau a tendance à solliciter un rouleau de formation de balles mobile (10.1, ..., 10.5) du premier ensemble (10) vers le second ensemble (11).

7. Appareil de formation de balles selon l'une des revendications précédentes,
**caractérisé en ce que**
le coulisseau de raccordement (16) est mobile de la première position de coulissement dans une direction de coulissement à la position de coulissement supplémentaire ou la position de coulissement supplémentaire adjacente et
le ou chaque rouleau de formation de balles mobile (10.1, ..., 10.5, 11.1, ..., 11.5) est mobile dans une direction de déplacement de rouleau
- d'une position de rouleau
- à une position de rouleau supplémentaire,
dans lequel la direction de déplacement de rouleau est perpendiculaire à la direction de coulissement.

8. Appareil de formation de balles selon l'une des revendications précédentes,
**caractérisé en ce que**
le dispositif de formation de balles (9) comprend un second dispositif de maintien de rouleau (18) et
le second ensemble (11) comprend plusieurs rouleaux de formation de balles (11.1, ..., 11.6),
dans lequel les rouleaux de formation de balles (11.1, ..., 11.6) du second ensemble (11) sont montés dans une séquence supplémentaire au niveau du second dispositif de maintien de rouleau (18) et
dans lequel la chambre de formation de balles (12) est positionnée entre les deux ensembles (10, 11) de rouleaux de formation de balles montés en deux séquences au niveau des deux dispositifs de maintien de rouleau (17, 18).

9. Appareil de formation de balles selon la revendication 8,
**caractérisé en ce que**
le coulisseau de raccordement (16) est mobile simultanément
- le long de la séquence des rouleaux de formation de balles du premier ensemble (10) et
- le long de la séquence supplémentaire des rouleaux de formation de balles du second ensemble (11), et dans lequel
- les deux dispositifs de maintien de rouleau (17, 18),
- les rouleaux des deux ensembles (10, 11) et
- le coulisseau de raccordement (16) sont opérationnels comme une fermeture à glissière.

10. Appareil de formation de balles selon la revendication 9,
**caractérisé en ce que**
les rouleaux de formation de balles (10.1, ..., 10.6) du premier ensemble (10) sont positionnés parallèles aux rouleaux de formation de balles (11.1, ..., 11.6) du second ensemble (11)
si le coulisseau de raccordement (16) est dans la première position de coulissement.

11. Appareil de formation de balles selon l'une des revendications précédentes,
**caractérisé en ce que**
la séquence des rouleaux de formation de balles (10.1, ..., 10.6) du premier ensemble (10) comprend
- le rouleau de formation de balles mobile (10.1) du premier ensemble (10) formant un rouleau d'extrémité de la séquence,
- un rouleau d'extrémité supplémentaire (10.6) du premier ensemble (10), et
- au moins un rouleau intermédiaire (10.2, ..., 10.5) qui est positionné sur le premier dispositif de maintien de rouleau (17) entre les deux rouleaux d'extrémité (10.1, 10.6),
dans lequel le rouleau d'extrémité mobile (10.1) et chaque rouleau intermédiaire (10.2, ..., 10.5) du premier ensemble (10) sont mobiles dans une direction perpendiculaire à leur axe de rotation dans au moins deux positions de rouleau,
dans lequel le coulisseau de raccordement (16) est mobile
- dans une première position de coulissement d'extrémité servant de première position de coulissement,
- dans une position de coulissement d'extrémité supplémentaire, et
- dans au moins une position de coulissement intermédiaire,
dans lequel le coulisseau de raccordement (16) dans une position de coulissement d'extrémité raccorde
- un rouleau d'extrémité (10.1, 10.6) du premier ensemble (10) à
- un rouleau de formation de balles (11.1, 11.6) du second ensemble (11),
dans lequel le coulisseau de raccordement (16) dans une position de coulissement intermédiaire raccorde
- un rouleau intermédiaire (10.2, ..., 10.5) du premier ensemble (10) à
- un rouleau de formation de balles (11.2, ..., 11.5) du second ensemble (11), et
dans lequel la taille de la chambre de formation de balles (12) augmente par palier lorsque le coulisseau de raccordement (16) est déplacé
- de la première position de coulissement
- via la ou chaque position de coulissement intermédiaire dans
- l'autre position de coulissement d'extrémité.

12. Appareil de formation de balles selon l'une des revendications précédentes,
**caractérisé en ce que**
l'appareil de formation de balles (1) comprend un dispositif d'alimentation (6),
dans lequel le dispositif d'alimentation (6) est agencé pour injecter un matériau en vrac à travers un orifice d'entrée (7) dans la chambre de formation de balles (12),
amenant ainsi le matériau en vrac injecté à appliquer une pression sur les rouleaux de formation de balles de délimitation des deux ensembles (10, 11),
dans lequel le coulisseau de raccordement (16) est agencé pour se déplacer
- de la première position de coulissement dans laquelle le rouleau de formation de balles mobile (10.1) du premier ensemble (10) est raccordé
- dans une position de coulissement supplémentaire dans laquelle le ou un rouleau de formation de balles supplémentaire (10.2, ..., 10.6) du premier ensemble (10) est raccordé
dans une direction à distance de l'orifice d'entrée (7),
augmentant ainsi la taille de la chambre de formation de balles (12).

13. Appareil de formation de balles selon la revendication 12,
**caractérisé en ce que**
le coulisseau de raccordement (16) est agencé pour se déplacer de la première position de coulissement dans une position de coulissement supplémentaire
si la pression appliquée est au-dessus d'un seuil donné.

14. Appareil de formation de balles selon la revendication 12 ou la revendication 13,
**caractérisé en ce que**
le dispositif de formation de balles (9) comprend un dispositif de retenue,
dans lequel le dispositif de retenue a tendance à déplacer le coulisseau de raccordement (16) le long de la séquence du premier ensemble (10) vers l'orifice d'entrée (7), et
dans lequel le coulisseau de raccordement (16) est agencé pour se déplacer de la première position de coulissement à la ou une position de coulissement supplémentaire à distance de l'orifice d'entrée (7)
contre la force de retenue appliquée par le dispositif de retenue.

15. Appareil de formation de balles selon la revendication 14,
**caractérisé en ce que**
le dispositif de formation de balles (9) comprend un capteur de position,
dans lequel le capteur de position est agencé pour mesurer la position de coulissement actuelle du coulisseau de raccordement (16) par rapport au premier ensemble (10),
dans lequel le dispositif de retenue est agencé pour appliquer une force de retenue sur le coulisseau de raccordement (16)
dans lequel la force de retenue appliquée a tendance à déplacer le coulisseau de raccordement (16) le long de la séquence vers l'orifice d'entrée (7), et
dans lequel le dispositif de retenue est agencé pour appliquer la force de retenue selon la position de coulissement mesurée.

16. Appareil de formation de balles selon l'une des revendications précédentes,
**caractérisé en ce que**
le dispositif de formation de balles (9) comprend
- un actionneur de coulisseau et
- un capteur de pression,
dans lequel le capteur de pression est adapté pour mesurer une valeur indicative de la pression que le matériau en vrac dans la chambre de formation de balles (12) applique sur au moins un rouleau de formation de balles qui contribue à délimiter la chambre de formation de balles (12), et
dans lequel l'actionneur de coulisseau est agencé pour déplacer le coulisseau de raccordement (16) de la première position de coulissement à la ou au moins une position de coulissement supplémentaire
selon des signaux provenant du capteur de pression.

17. Appareil de formation de balles selon l'une des revendications précédentes,
**caractérisé en ce que**
le dispositif de formation de balles (9) est agencé
- pour fournir dans chaque position de coulissement du coulisseau de raccordement (16) une chambre de formation de balles sensiblement en forme de tambour (12) et
- pour former une balle cylindrique ronde (B) dans la chambre de formation de balles en forme de tambour fournie (12).

18. Appareil de formation de balles selon l'une des revendications précédentes,
**caractérisé en ce que**
le premier dispositif de maintien de rouleau comprend au moins un raccord de rouleau flexible (17),
dans lequel le ou chaque raccord de rouleau flexible (17) raccorde au moins deux rouleaux de formation de balles adjacents (10.1, 10.2, ...) du premier ensemble (10) l'un à l'autre et
dans lequel le raccord de rouleau flexible (17) ou la totalité de raccords de rouleau flexibles permet aux rouleaux de formation de balles mobiles ou à chaque rouleau de formation de balles mobile (10.1, ..., 10.5) du premier ensemble (10) d'adapter leur position relative à chaque rouleau adjacent du premier ensemble (10) dans chaque position de coulissement du coulisseau de raccordement (16).

19. Appareil de formation de balles selon la revendication 18,
**caractérisé en ce que**
le coulisseau de raccordement (16) est, dans chaque position de coulissement, raccordé au ou à un raccord de rouleau flexible (17) et
est agencé pour coulisser
- sur le raccord de rouleau flexible (17) ou
- sur un raccord après l'autre raccord
lorsqu'il se déplace le long de la séquence du premier ensemble (10).

20. Appareil de formation de balles selon la revendication 18 ou la revendication 19,
**caractérisé en ce que**
le ou au moins un raccord de rouleau flexible (17)
- conserve la distance entre deux rouleaux de formation de balles raccordés adjacents (10.1, 10.2, ...) du premier ensemble (10) en dessous d'une distance maximale et
- permet à un rouleau de formation de balles raccordé par le raccord de rouleau flexible (17) de tourner autour de l'autre rouleau de formation de balles également raccordé par ce raccord de rouleau flexible (17).

21. Appareil de formation de balles selon l'une des revendications 18 à 20,
**caractérisé en ce que**
le second ensemble (12) comprend plusieurs rouleaux de formation de balles (11.1, ..., 11.6) et le dispositif de formation de balles (9) comprend un second dispositif de maintien de rouleau (18),
dans lequel au moins deux rouleaux de formation de balles (11.1, ..., 11.6) du second ensemble (11) sont montés dans une séquence supplémentaire au niveau du second dispositif de maintien de rouleau (18),
dans lequel le second dispositif de maintien de rouleau (18) comprend au moins un raccord de rouleau flexible supplémentaire,
dans lequel le ou chaque raccord de rouleau supplémentaire raccorde au moins deux rouleaux de formation de balles adjacents (11.1, 11.2, ...) du second ensemble (11) l'un à l'autre,
dans lequel le coulisseau de raccordement (16) est, dans chaque position de coulissement, raccordé au ou à au moins un raccord de rouleau flexible supplémentaire et
est agencé pour coulisser simultanément
- sur le ou les raccords de rouleau flexibles du premier dispositif de maintien de rouleau (17) et
- sur le ou les raccords de rouleau flexibles supplémentaires du second dispositif de maintien de rouleau (18).

22. Appareil de formation de balles selon l'une des revendications précédentes,
**caractérisé en ce que**
l'appareil de formation de balles (1) est agencé
- pour former une première balle dans la chambre de formation de balles (12) et
- pour former ensuite une seconde balle dans la chambre de formation de balles (12),
dans lequel le coulisseau de raccordement (16) raccorde un rouleau de formation de balles du premier ensemble (10) à un rouleau de formation de balles du second ensemble (11) lorsque la formation de la première balle est terminée et
dans lequel le coulisseau de raccordement (16) raccorde un rouleau de formation de balles différent du premier ensemble (10) à un rouleau de formation de balles du second ensemble (11) lorsque la formation de la seconde balle est terminée,
- formant ainsi la première balle avec une première dimension, et
- formant ainsi la seconde balle avec une seconde dimension différente.

23. Appareil de formation de balles selon l'une des revendications précédentes,
**caractérisé en ce que**
dans chaque position de coulissement du coulisseau de raccordement (16), la chambre de formation de balles (12) délimitée par au moins certains des rouleaux de formation de balles (10, 11) est en forme de tambour,
dans lequel
- le diamètre de la chambre de formation de balles (12) avec le coulisseau de raccordement (16) dans la ou au moins une position de coulissement supplémentaire est au moins 1,5 fois
- le diamètre de la chambre de formation de balles (12) avec le coulisseau de raccordement (16) dans la première position de coulissement.

24. Procédé de formation de balles pour former au moins une balle cylindrique ronde (B) à partir d'un matériau en vrac dans une chambre de formation de balles (12),
dans lequel un appareil de formation de balles (1) comprenant un dispositif de formation de balles (9) est utilisé,
dans lequel le dispositif de formation de balles (9) comprend
- une pluralité de rouleaux de formation de balles montés rotatifs (10.1, ..., 10.6, 11.1, ..., 11.6, 23.1, ..., 24.2, 8.1, 8.2) et
- un premier dispositif de maintien de rouleau (17),
dans lequel la chambre de formation de balles (12) est entourée au moins temporairement par tous les rouleaux de formation de balles (10.1, ..., 10.6, 11.1, ..., 11.6, 23.1, ..., 24.2, 8.1, 8.2) de la pluralité,
dans lequel
- au moins un rouleau de formation de balles mobile (10.1, ..., 10.5) et au moins un rouleau de formation de balles supplémentaire (10.6) appartiennent à un premier ensemble (10) et
- au moins un autre rouleau de formation de balles appartient à un second ensemble (11),
dans lequel la chambre de formation de balles (12) est positionnée entre les deux ensembles (10, 11),
dans lequel les rouleaux de formation de balles (10.1, ..., 10.6) du premier ensemble (10) sont montés dans une séquence au niveau du premier dispositif de maintien de rouleau (17),
dans lequel le ou chaque rouleau de formation de balles mobile (10.1, ..., 10.5) du premier ensemble (10) est mobile perpendiculairement à son axe de rotation, et
dans lequel le procédé comprend l'étape selon laquelle
le dispositif de formation de balles (9) forme
- pendant une phase de formation de balles de petite taille et
- pendant au moins une phase de formation de balles de grande taille
la balle (B) ou plusieurs balles dans la chambre de formation de balles (12),
dans lequel la taille de la chambre de formation de balles (12) dans la phase de formation de balles de petite taille est plus petite que celle dans la ou chaque phase de formation de balles de grande taille,
dans lequel, entre deux phases de formation de balles, le ou au moins un rouleau de formation de balles mobile (10.1) est déplacé perpendiculairement à son axe de rotation, et
dans lequel ce déplacement de rouleau augmente ou diminue la taille de chambre de la chambre de formation de balles (12),
**caractérisé en ce que**
le dispositif de formation de balles (9) comprend en outre un coulisseau de raccordement (16),
dans lequel le coulisseau de raccordement (16) est mobile le long de la séquence de rouleaux de formation de balles (10.1, ..., 10.6) du premier ensemble (10) dans au moins deux positions de coulissement différentes,
dans lequel le coulisseau de raccordement (16) raccorde dans chaque position de coulissement
- un rouleau de formation de balles (10.1, ..., 10.6) du premier ensemble (10) à
- un rouleau de formation de balles (11.1, ..., 11.6) du second ensemble (11),
dans lequel les deux rouleaux de formation de balles raccordés (10.1, 11.1, ..., 10.6, 11.6) contribuent à délimiter la chambre de formation de balles (12),
dans lequel dans la phase de formation de balles de petite taille
- le coulisseau de raccordement (16) dans une première position de coulissement raccorde le ou un rouleau de formation de balles mobile (10.1) du premier ensemble (10) à un rouleau de formation de balles (11.1) du second ensemble (11) et
- le coulisseau de raccordement (16) est positionné entre le ou au moins un rouleau de formation de balles supplémentaire (10.2, ..., 10.6) du premier ensemble (10) et la chambre de formation de balles (12) de sorte que ce rouleau de formation de balles supplémentaire (10.2, ..., 10.6) soit espacé de la chambre de formation de balles (12),
dans lequel, entre les deux phases de formation de balles, le coulisseau de raccordement (16) est déplacé par rapport à la séquence de rouleaux du premier ensemble (10)
- de la première position de coulissement
- à une position de coulissement supplémentaire,
provoquant ainsi le déplacement du ou d'au moins un rouleau mobile (10.1), et
dans lequel, dans la ou chaque phase de formation de balles de grande taille
- le coulisseau de raccordement (16) dans la ou une position de coulissement supplémentaire raccorde le ou un rouleau de formation de balles supplémentaire (10.2, ..., 10.6) du premier ensemble (10) à un rouleau de formation de balles (11.2, ..., 11.6) du second ensemble (11) et
- le rouleau de formation de balles mobile (10.1) du premier ensemble (10) raccordé dans la phase de formation de balles de petite taille et le rouleau de formation de balles raccordé supplémentaire (10.1, ..., 10.6) du premier ensemble (10) raccordé dans la phase de formation de balles de grande taille contribuent tous deux à délimiter la chambre de formation de balles (12)
de sorte que la taille de la chambre de formation de balles (12) dans la ou chaque phase de formation de balles de grande taille soit plus grande que sa taille dans la phase de formation de balles de petite taille.

25. Procédé de formation de balles selon la revendication 24,
**caractérisé en ce que**
un rouleau de formation de balles mobile (10.1) du premier ensemble (10) forme le rouleau d'extrémité de la séquence,
dans lequel, dans la phase de formation de balles de petite taille, le coulisseau de raccordement (16) raccorde
- le rouleau de formation de balles mobile (10.1) du premier ensemble (10) formant le rouleau d'extrémité à
- un rouleau de formation de balles (11.1) du second ensemble (11) et
dans lequel, dans chaque phase de formation de balles, le rouleau de formation de balles mobile (10.1) du premier ensemble (10) formant le rouleau d'extrémité contribue à délimiter la chambre de formation de balles (12).

26. Procédé de formation de balles selon la revendication 24 ou la revendication 25,
**caractérisé en ce que**
- l'appareil de formation de balles (1) réalise
- la phase de formation de balles de petite taille et ensuite
- la ou chaque phase de formation de balles de grande taille,
dans lequel l'appareil de formation de balles (1) forme une balle (B) suite à la réalisation de la séquence de phases de formation de balles.

27. Procédé de formation de balles selon l'une des revendications 24 à 26,
**caractérisé en ce que**
un capteur de pression mesure une valeur indicative de la pression que le matériau en vrac dans la chambre de formation de balles (12) applique sur au moins un rouleau de formation de balles qui contribue à délimiter la chambre de formation de balles (12),
dans lequel l'étape selon laquelle le coulisseau de raccordement (16) est déplacé de la première position de coulissement à la position de coulissement supplémentaire
est déclenchée par l'événement selon lequel la pression mesurée atteint un seuil donné.

28. Procédé de formation de balles selon l'une des revendications 24 à 27,
**caractérisé en ce que**
l'appareil de formation de balles (1) forme au moins deux balles cylindriques rondes dans les au moins deux phases de formation de balles consécutives,
à savoir une balle par phase de formation de balles,
dans lequel l'étape selon laquelle le rouleau de formation de balles mobile (10.1) du premier ensemble (10) est déplacé est réalisée
- après qu'une première balle est formée et
- avant qu'une seconde balle soit formée.
